# EUROPEAN PATENT APPLICATION

(11) **EP 1 710 665 A1**
(43) Date of publication of application: **11.10.2006**
(21) Application number: 04817659.8
(22) Date of filing: 16.12.2004
(51) Int. Cl.: G06F 3/02, G06F 3/023, H04M 1/23

(54) **MOBILE COMMUNICATION TERMINAL**

(30) Priority: 15.01.2004 JP 2004007834; 21.01.2004 JP 2004012974; 27.02.2004 JP 2004052646; 01.03.2004 JP 2004056095
(71) Applicant: Vodafone K.K., Tokyo 105-7317 (JP)
(72) Inventor: INOUE, Mikio, 1056205 (JP)
(74) Representative: Grünecker, Kinkeldey, Stockmair & Schwanhäusser Anwaltssozietät
(86) International application number: PCT/JP2004/018838
(87) International publication number: WO 2005/069114

(57) **Abstract**

The present invention provides a mobile communication terminal that enables advanced operability and flexibility in user operation while maintaining portability.

This mobile communication terminal includes an image projection unit 130, a key selection detection unit (an operation detection means) 180, and a main control unit (a data processing means) 111. The image projection unit 130 projects an operation-plane image that virtually displays the operation-plane of an operation device operated by users. The key selection detection unit 180 detects operation on the operation-plane image (key layout image) projected by the image projection unit 130. The main control unit 111 executes a predetermined data process, based on the detection results of operation detected by the key selection detection unit 180.

## Description

### Technical Field

The present invention relates to mobile communication terminal such as a mobile phone capable of communicating via a mobile communication network.

### Background Art

In conventional mobile communication terminals such as mobile phones, a key operation unit with a plurality of keys was provided in the main body unit. For example, users can input data by selecting and pressing keys on the key operation unit with their fingers, when they hold the mobile communication terminal with their hands. By means of this key input operation, a predetermined data processing is executed in the control unit of mobile communication terminal and the users can store input phone numbers and data of email contents in its memory as well as start a phone call and send an e-mail.

### Disclosure of the Invention

### Problems to be Solved by the Invention

However, in the foregoing conventional mobile communication terminals such as mobile phones, the key operation unit is configured to have bare minimum of small-size keys located on it for downsizing to ensure portability. Therefore, there was a problem of a poor operability of key input operation in comparison with a keyboard of ordinary computer apparatus. On the other hand, if a key operation unit is configured so as to obtain the same level of operability as in the case of keyboards of ordinary computer devices, the size of the key operation unit increases and portability of the mobile communication terminal cannot be maintained. In this way, it was difficult for mobile communication terminals to combine portability with operability of keys.
Furthermore, in addition to the original telephone calling functions, recent mobile communication terminals such as mobile phones are now able to install and execute various application programs such as games and music output. When executing these kinds of application programs, it is convenient if the layout of keys on key operation plane that works as an interface with users can be switched over in accordance with content of the application programs. For example, when an application program for playing piano music is executed, it is convenient if piano music can be played by performing an operation of selecting keys on a piano key layout. Furthermore, when an application program for a game, it is convenient if the game can be proceeded by performing an operation of selecting keys on a key layout specialized for the game content.
In the above description, it is explained about the case in which an operation device that is virtually expressed by images projected on a projection screen is a keyboard, however, the same problems as in the above-mentioned case can occur with other operation devices such as pointing devices.

The present invention has been accomplished in view of the above-mentioned background. An object of the present invention is to provide a mobile communication terminal that simultaneously enables advanced operability and flexibility in user operation while maintaining portability.

### Means for Solving the Problem

To achieve the object, a mobile communication terminal according to the present invention is a mobile communication terminal comprising image projection means for projecting an operation-plane image that virtually displays an operation-plane of an operation device operated by users; and operation detection means for detecting operation on the operation-plane image projected by the image projection means; and data processing means for performing a predetermined data processing based on the detection results of operation detected by the operation detection means.
In this mobile communication terminal, the image projection means projects a virtual operation-plane image on a plane operable by users. Users perform operations on the projected operation-plane image. These operations are detected by the operation detection means, and based on the detection data results of the detected operation, a predetermined data processing corresponding to the operation is executed by the data processing means.

In the aforementioned mobile communication terminal, it is preferable that the image projection means is configured so as to project each of a plurality of kinds of mutually different operation-plane images, and the operation detection means preferably has a plurality of kinds of mutually different recognition functions to recognize operation contents by at least one of position, direction, and movement of operation objects on the plurality of kinds of operation-plane images. The recognition of operation contents with respect to the recognition function may be recognized by one of position, direction, and movement of an operation object on the operation-plane image, or by a combination of two or more of position, direction, and movement of the operation object on the operation-plane image. Also, the "operation object" refers to an object that move on the operation-plane image in operation, and it includes an operation support device such as an input pen, a pointing tool (pointer member), as well as users' body parts such as fingers.
In this mobile communication terminal, at least one of a plurality of kinds of mutually different operation-plane images is projected. Users perform operations on this projected operation-plane image. These operations by users are recognized by a recognition function corresponding to the projected operation-plane image among a plurality of kinds of mutually different recognition functions of the operation detection means. Based on the recognition results of these operation contents, a predetermined data processing that corresponds to the operation is executed by the data processing means. Therefore, it is possible to correctly detect operations with respect to each of a plurality of kinds of mutually different operation-plane images and correctly execute a predetermined data processing that corresponds to the operation.

Furthermore, it is preferable that the aforementioned mobile communication terminal comprises designation means for designating at least one of the plurality of kinds of recognition functions, the image projection means projects the operation-plane image that corresponds to the recognition function designated by the designation means, and the operation detection means detects the operation on the operation-plane image using the recognition function designated by the designation means.
In this mobile communication terminal, users can designate at least one of a plurality of recognition functions by using the designation means. An operation-plane image that corresponds to this designated recognition function is projected by the image projection means. Operations on this projected operation-plane image are detected by the recognition function that was designated by the designation means. Accordingly, users can designate a recognition function that is used for operation detection among a plurality of kinds of recognition functions of the operation detection means.

Furthermore, it is preferable that the aforementioned mobile communication terminal comprises application execution management means for managing an execution environment for application program, the image projection means projects the operation-plane image that corresponds to the recognition function designated by the application execution management means, and the operation detection means detects the operation using the recognition function designated by designation information received from the application execution management means.
In this mobile communication terminal, at least one of a plurality of recognition functions can be designated by designation information from the application execution management means. An operation-plane image that corresponds to this designated recognition function is projected by the image projection means. User operation on this projected operation-plane image is detected by using the recognition function that is designated by the designation information. Therefore, a recognition function that is used for operation detection can be designated by application programs among a plurality of kinds of recognition functions of the operation detection means.

Furthermore, it is preferable that the aforementioned mobile communication terminal comprises designation means for designating at least one of a plurality of kinds of operation-plane images, the image projection means projects the operation-plane image designated by the designation means, and the operation detection means detects the operation on the operation-plane image using the recognition function that corresponded to the operation-plane image designated by the designation means.
In this mobile communication terminal, users can designate at least one of a plurality of operation-plane images by the designation means. This designated operation-plane image is projected by the image projection means. Operations on this projected operation-plane image are detected using the recognition function that corresponds to the operation-plane image designated by the designation means. Therefore, users can designate an operation-plane image that is used for operation detection among a plurality of kinds of operation-plane images that can be projected by the image projection means.

Furthermore, it is preferable that the aforementioned mobile communication terminal comprises application execution management means for managing an execution environment for application program, the image projection means projects operation-plane images designated by designation information received from the application execution management means, and the operation detection means detects the operation on the operation-plane image using a recognition function that correspond to the operation-plane image designated by designation information received from the application execution management means.
In this mobile communication terminal, at least one of a plurality of operation-plane images can be designated by designation information from the application execution control means. This designated operation-plane image is projected by the image projection means. User operation on this projected operation-plane image is detected by using the recognition function that corresponds to the operation-plane image designated by the designation information. Therefore, an operation-plane image that is used for operation detection can be designated by application programs among a plurality of kinds of operation-plane images that can be projected by the image projection means.

Furthermore, it is preferable that the aforementioned mobile communication terminal comprises, memory means for memorizing a plurality of image data that corresponds to each of a plurality of kinds of operation-plane images, application program execution management means for performing an application program selected from a plurality of kinds of application programs, and instruction generation means for generating operation-plane selection instructions in accordance with content of the aforementioned selected application program; wherein the image projection means, based on an operation-plane image selection instruction generated by the instruction generation means, selects one image data from a plurality of image data memorized in the memory and projects the operation-plane image of the selected image data, and the application program execution management means performs a data processing that corresponds to the operation detected by the operation detection means in accordance with content of the application program during execution of the selected application program.
In this mobile communication terminal, an application program among the plurality of application programs is executed selectively. Then, by users' operation on the projected operation-plane image, a data processing is performed in accordance with content of the executed application program. In this mobile communication terminal, an operation-plane image operated by users is selected in accordance with content of a selectively executed application program among a plurality of kinds of key layout images memorized in memory means. Therefore, when using an application program, users can perform operation on an operation-plane image that is appropriate for the application program. This means that users can utilize application programs by using an operation-plane image that is an image of the operation unit appropriate for each application program by which a mobile communication terminal can be used for various purposes.
Moreover, in this mobile communication terminal, an operation-plane image selection instruction is generated in accordance with content of application program, and an operation-plane image projected by the image projection means is selected based on the instruction. Furthermore, in this mobile communication terminal, a plurality of kinds of operation-plane images that are expected to be adaptable to undeveloped application programs can be memorized beforehand in memory means. Thus, for developers of application programs, with respect to developing new application programs, if operation-plane image selection instructions for selecting operation-plane images appropriate to the new program are added to the application program, individual development of new operation-plane images is not required. Accordingly, it is possible to prevent development costs of application programs from increasing.

Furthermore, it is preferable that the aforementioned mobile communication terminal comprises application program execution management means for executing an application program selected from a plurality of application programs and performing a data process corresponding to operation detected by the operation detection means, in accordance with content of the application program, and the data readout means for reading out image data of the operation-plane image included in the content of the selected application program; wherein the image projection means projects operation-plane images based on the image data read out by the data readout means when executing the selected application program.
In the aforementioned mobile communication terminals, in order for users to perform operation on the operation-plane image appropriate for an application program, pre-processing to obtain a proper operation-plane image for the application program beforehand and memorize it in memory means is required. If this pre-processing is inconvenient for users, usability of the mobile communication terminal deteriorates. In this mobile communication terminal, an operation-plane image operated by users is based on image data included in the application program, and image data of this operation-plane image can be acquired together with the application program corresponding to the image when acquiring the corresponding application program. Accordingly, the projected operation-plane image can be an operation-plane image with a dedicated key layout optimized for each application program. According to the above, each operation-plane image, which is an image of the operation unit appropriate for each application program that enables the mobile communication terminal to be utilized for various purposes, becomes easy to be obtained, and usability is improved, because users can operate the optimized operation-plane images when utilizing application programs.
The image data of operation-plane image included in content of an application program, which is obtained together with the application program when obtaining application program, is acceptable. The image data may be incorporated into the application program or may be added to the application program as other separate added data.

In the mobile communication terminal, the operation detection means preferably detects operation on the operation-plane image, and comprises control means for changing at least one part of the operation-plane image in accordance with the content of the operation detected by the operation detection means.
In this mobile communication terminal, at least one part of the operation-plane image is changed in accordance with content of operation detected by the operation detection means. During operation on the operation-plane image while watching the operation-plane image, users can recognize whether the operation is performed incorrectly or not by observing whether the operation-plane image has changed. For example, if at least one part of the operation-plane image is changed when a user operates in error on an operation-plane image, it enables the user watching this image change to recognize the error. As mentioned above, because users can recognize whether the users perform an incorrect operation or not, by observing a change on the operation-plane image, even inexperienced users, who operate a virtual operation device represented by the operation-plane image while watching the operation-plane image, can immediately recognize an operation error. As a result, it is possible to improve usability for users by utilizing virtual operation devices represented by operation-plane images.
The "change of operation-plane image" includes a change in color and luminance of the changed parts, in addition to a change of image represented in the changed part to other images.

In the mobile communication terminal, the control means preferably changes the image part that is subject to operation and detected by the operation detection means.
In this mobile communication terminal, because image part subject to operation is changed when a user operates on the operation-plane image, it enables the user who is watching this change to recognize whether the intended operation has been completed or not. Therefore, because it enables an inexperienced user to recognize whether the user properly performed an intended operation or not, the user is able to perform an accurate operation while confirming the operation result.

Furthermore, in the aforementioned mobile communication terminal, the image projection means preferably comprises a light source, a spatial light modulation unit for modulating light output from the light source, and an optical system for projection imaging which projects by imaging the light-image output from the spatial light modulation unit on an external projection screen.
In this mobile communication terminal, light output from the light source is modulated by the spatial light modulation unit, and the light-image output from the spatial light modulation unit is projected by imaging onto an external projection screen by the optical system for projection imaging. By controlling modulation with this spatial light modulation unit, the kinds of operation-plane images projected on the projection screen can be switched over. By controlling modulation in this way by this spatial light modulation unit, the kinds of operation-plane images projected on the projection screen can be easily switched over.

Furthermore, it is preferable that the mobile communication terminal comprises an optical system for diffused illumination for homogeneously illuminating by diffusing light from the light source to external illumination screen, and the light source and the spatial light modulation unit are both shared to generate the light-image as a subject to projection and generate light as a subject to diffused illumination.
In this mobile communication terminal, the light source and the spatial light modulation unit for modulating light output from the light source are shared for generating light as a subject to diffused illumination and light-image as a subject to projection. By this sharing of the light source and spatial light modulation unit, the number of units can be decreased in comparison with cases in which optical units to generate light as a subject to diffused illumination and optical units to generate light-image as a subject to projection are provided separately.

Furthermore, it is preferable that the aforementioned mobile communication terminal comprises a camera unit that generates image data by transforming light-image into electrical signal and an optical system for camera imaging to image light-image as a subject to be shot on the camera unit; wherein the foregoing operation detection means is configured with operation object detection means for detecting at least one of position, direction, and movement of an operation object operating on the operation-plane image and operation detection data generation means for generating operation detection data corresponding to position, direction or movement of the operation object, based on the detection results of the operation object detection means, and the camera unit and the optical system for camera imaging are both used as the operation object detection means. The foregoing operation object detection means may detect at least one of position, direction, and movement of the operation object on the operation-plane image, or detect a combination of two or more of position, direction, and movement of the operation object on the operation-plane image.
In this mobile communication terminal, with the optical system for camera imaging and the camera unit that are shared as the operation object detection means forming the operation detection means, at least one of position, direction, and movement of an operation object on the virtual operation-plane image is detected as a three dimensional image. Because at least one of position, direction, and movement of the operation object on the virtual operation-plane image can be detected by performing processes such as image process based on this three dimensional image information of the operation object, the accuracy for detection of operation content on the operation-plane image can be improved. Furthermore, since the optical system for camera imaging and the camera unit used for image shooting ordinary landscapes and portraits or the like are shared as the operation object detection means, the number of unit items can be decreased in comparison with cases that a part of the operation detection means, which detects an operation object moving to operate on the operation-plane image, is separately provided.

Furthermore, in the aforementioned mobile communication terminal, it is preferable that the operation-plane image projected by the image projection means is a key layout image that virtually displays a keyboard configured with a plurality of keys, and the operation detection means detects which key is selected on the key layout image.
In this mobile communication terminal, by the image projection means, a virtual key layout image is projected as an operation-plane image on a plane operable by users. Users perform an operation of key selection on the projected key layout image. This key selection by the users is detected by the key selection detection means, and a predetermined data process corresponding to the selected key is executed by the data processing means. Without physically connecting any keyboard, because users can perform the same operation as when a keyboard is connected, it is possible to miniaturize and improve portability of the mobile communication terminal.
The foregoing "key layout image" is a virtual image configured with a plurality of keys used by users so as to perform data input and operation control on a mobile communication terminal. This "key layout image" includes a virtual key layout image that has a key layout similar to a keyboard normally used for personal computers, and a virtual key layout image that has a key layout similar to a keyboard of a music instrument such as a piano.

The operation-plane image projected by the image projection means may be a two-dimensional image, or a three-dimensional image projected in three-dimensional space by holographic technology or the like that can be visually recognized as if an operation device exists in three-dimensional space.
The above-described "mobile communication terminals" include mobile phones of the PDC (Personal Digital Cellular) system, the GSM (Global System for Mobile Communications) system, the TIA (Telecommunications Industry Association) system, and the like, mobile phones standardized by IMT (International Mobile Telecommunications)-2000, mobile phones of the TD-SCDMA (MC: Multi Carrier) system which is one of the TD-SCDMA (Time Division Synchronous Code Division Multiple Access) systems, PHSs (Personal Handyphone Systems), car phones, and the like. The "mobile communication terminals" also include, in addition to the foregoing phones, mobile information communication terminals with no telephone function such as PDAs (Personal Digital Assistance).

Data processing and control in a mobile communication terminal can also be realized by allowing a computer provided to the mobile communication terminal to execute a predetermined program (including application programs). Receiving and passing of a program used on the computer may be performed using a recording medium, such as a Flexible Disk or a CD-ROM, having recorded thereon a program as digital information, or may be performed using a communication network such as a computer network.
Programs executable on a computer provided with the mobile communication terminal in the present invention include the following application programs.
For example, an application program according to the present invention can be executed on a computer provided in an electronic apparatus that comprises memory means for memorizing a plurality of image data that corresponds to each of a plurality of kinds of virtual operation-plane images, image projection means for projecting the operation-plane image based on image data memorized in the memory means, operation detection means for detecting operation on the operation-plane image projected by the image projection means, and control means for selecting one image data from the plurality of image data memorized in the memory means and enabling the operation-plane image of selected image data to be projected by the image projection means, wherein the application program has the computer function as instruction generation means for generating an image selection instruction for enabling the control means to select image data of operation-plane image projected by the image projection means from the plurality of image data memorized in the memory means and as data processing means for performing a data process that corresponds to the operation detected by the operation detection means.
Furthermore, another application program according to the present invention can be executed on a computer provided in an electronic apparatus that comprises image projection means for projecting a virtual operation-plane image, operation detection means for detecting operation on key layout images projected by the image projection means, application program execution management means for executing an application program selected from a plurality of application programs, data readout means for reading out image data of the operation-plane image included in the content of the selected application program, and control means for allowing the operation-plane image based on the image data read out by the data readout means, when executing the selected application program, to be projected by the image projection means, wherein the application program includes the image data of operation-plane image read out by the data readout means and has the computer function as data processing means for performing a data process that corresponds to the operation detected by the operation detection means.
Furthermore, the application programs include not only platform-independent application programs of mobile communication terminals but also platform-dependent application programs of mobile communication terminals.

### Effect of the Invention

According to the present invention, portability of mobile communication terminals can be ensured, because a virtual operation-plane image can be projected on a plane where users can operate and the users can perform operation on the operation-plane image, without connecting an additional unit such as a keyboard. Furthermore, it is capable of performing operations with advanced operability and flexibility, because any operation-plane image that corresponds to content of predetermined data processing executed by data processing means can be used for projection.

### Brief Description of Drawings

Fig. 1 is a block diagram showing an example of overall configuration of a mobile phone according to the first embodiment.
Fig. 2 is a block diagram showing a configuration example of an image projection unit of the same mobile phone.
Fig. 3 is a block diagram showing another configuration example of the image projection unit.
Fig. 4A is an internal configuration diagram showing another configuration example of the image projection unit of the mobile phone when using camera and illumination lamp functions.
Fig. 4B is an internal configuration diagram of the same mobile phone when using image projection function.
Fig. 5A is a block diagram showing another configuration example of the image projection unit.
Fig. 5B is a partial lateral view of the mobile phone equipped with the same image projection unit.
Fig. 6A is a perspective view of the mobile phone projecting a keyboard image.
Fig. 6B is a perspective view of the mobile phone projecting a game controller image.
Fig. 7 is a block diagram showing a configuration example of a key selection detection unit of the same mobile phone.
Fig. 8 is a lateral view of the mobile phone projecting a keyboard image.
Fig. 9 is an illustration showing a detection principle of key selection operation.
Fig. 10 is an illustration showing detection principle of key selection operation according to a modified example.
Fig. 11 is a block diagram showing another configuration example of the key selection detection unit.
Fig. 12 is an illustration explaining overview configuration of a mobile communication system capable of utilizing a mobile phone according to the second embodiment of the invention.
Fig. 13 is an overview configuration diagram showing an example of hardware configuration of a download server forming the same mobile communication system.
Fig. 14 is a block diagram showing an example of the overview configuration of a mobile phone capable of utilizing the same mobile communication system.
Fig. 15 is an illustration showing an example of a software configuration in the same mobile phone.
Fig. 16 is a flow chart showing an example of control flow when executing an application program by the same mobile phone.
Fig. 17 is a flow chart showing an example of control flow when executing an application program by a mobile phone according to the third embodiment of the invention.
Fig. 18 is a block diagram showing a configuration example of a key selection detection unit of the same mobile phone.
Fig. 19 is a control block diagram relating to a process of changing the selection key image in a mobile phone according to the forth embodiment of the invention.
Fig. 20 is a perspective view of a mobile phone for describing the state when the color of the key image is modified by the same process of changing the selection image.
Fig. 21 is a perspective view of a mobile phone for describing the state when a user performs key operation in error.
Fig. 22 is a block diagram showing an configuration example of an operation position detection unit provided in a mobile phone according to modified example.
Fig. 23 is a perspective view of the mobile phone for describing the state when color of text character trajectory is modified after a user draws in the modified example.
Fig. 24 is a perspective view of a mobile phone for describing the state when color of a menu selected by a user from the menu display is modified in another modified example.
Fig. 25 is a perspective view of a mobile phone according to another modified example.
Fig. 26A is an internal configuration diagram of the normal operation mode of the same mobile phone (when using camera and illumination lamp functions).
Fig. 26B is an internal schematic diagram of the key input operation mode of the same mobile phone (when using image projection function).

### Description of Reference Numerals

- 100: MOBILE PHONE
- 100A: MAIN BODY UNIT
- 100B: LIGHT UNIT
- 111: MAIN CONTROL UNIT
- 113: WIRELESS COMMUNICATION UNIT
- 119: DISPLAY UNIT (LIQUID CRYSTAL DISPLAY)
- 130: IMAGE PROJECTION UNIT
- 140: CAMERA UNIT
- 150: APPLICATION PROGRAM EXECUTION MANAGEMENT UNIT
- 180: KEY SELECTION DETECTION UNIT
- 161: FIRST LIGHT OUTPUT AND DETECTION UNIT
- 162: SECOND LIGHT OUTPUT AND DETECTION UNIT
- 163: LIGHT SOURCE DRIVE UNIT
- 164: KEY SELECTION DATA GENERATION UNIT
- 200: PROJECTION SCREEN
- 210: KEYBOARD IMAGE
- 210A: KEYS SUBJECT TO SELECTION
- 300: FINGER
- 310: GAME CONTROLLER IMAGE
- 405: HANDWRITTEN INPUT OPERATION-PLANE IMAGE
- 410: MENU SELECTION IMAGE

### Best Mode for Carrying Out the Invention

[Embodiment 1]
First, the first embodiment of the present invention will be described.

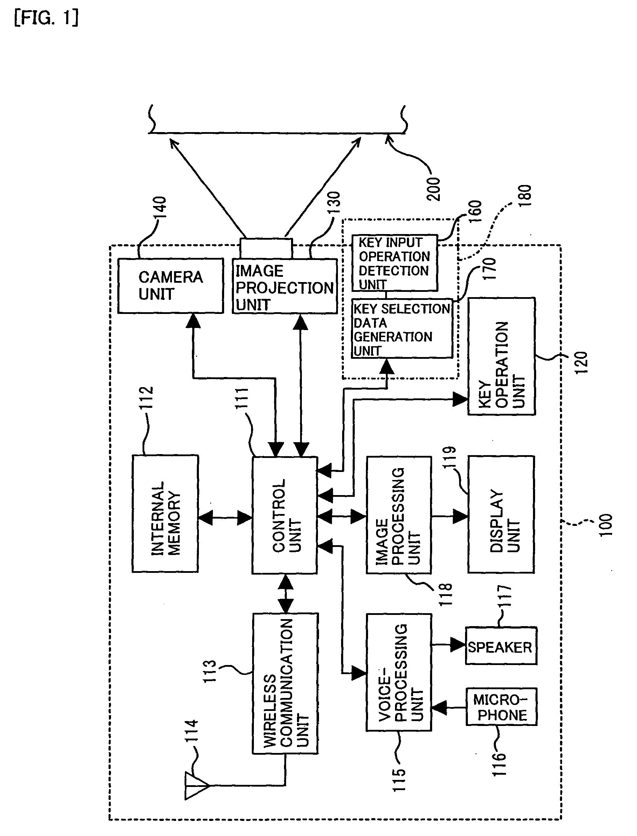

Fig. 1 is a block diagram showing an example of a configuration overview of a mobile phone as a mobile communication terminal (electronic apparatus) according to the embodiment 1. A main unit 100 of this mobile phone comprises a main control unit 111 as control means, an internal memory 112 as memory means, a wireless communication unit 113 as communication means, and an antenna 114. The main control unit 111 connects to a microphone 116 and a speaker 117 via an audio processing unit 115, connects to a display unit 119 via an image process unit 118, and further connects to a key operation unit 120.
The mobile phone in this embodiment comprises an image projection unit 130 as image projection means that projects an image on an external projection screen (hereinafter referred to as "projection screen") 200 that is recognized visually by users and a camera unit 140 as image shooting means that shoots an image such as a portrait and a landscape. The mobile phone further comprises a key selection detection unit (key selection detection means) 180 as operation detection means that detects which key is selected on the keyboard image (virtual key layout image) as an operation-plane image that is projected on the projection screen 200 that is utilized for operation by users. Detailed configuration and operation of the image projection 130 and key selection detection unit 180 are to be hereinafter described.

The main control unit 111 is configured with, for example, a CPU, a cache memory, a system bus and the like, and by executing the predetermined control program, it performs the sending and receiving of data between each part of the internal memory 112 and the wireless communication unit 113, and controls each unit. Furthermore, the main control unit 111 is used as control means that controls image projection by the image projection 130 and detection of key selection by the key selection detection unit 180. The main control unit 111 is further used data process means that performs a predetermined data process corresponding to a user's key selection operation, that is, a data processing means that executes a predetermined data process corresponding to the key selected by a user, based on key selection data as detection data output from the key selection detection unit 180. The data process includes a data processing that displays text character data corresponding to the selected key on the display and memorizes them in the internal memory, and a data processing that changes execution content of application program for a game or the like.

The internal memory 112 is configured with, for example, semiconductor memory such as RAM or ROM, and memorizes a control program executed by the control unit 111 as well as various types of data. This internal memory 112 is also used as content data memory means that memorizes contents data such as image, music, program and the like downloaded from information providing sites. Furthermore, this internal memory 112 is also used as data memory means that memorizes image data to be displayed on the image display unit 119 and image data to be projected by the image projection unit 130 as well as key selection data to be detected by the key selection detection unit 180.

The wireless communication unit 113 is controlled by the control unit 113 and, via the antenna 114, performs wireless communication between base stations of a mobile telecommunication network as a communication network with the predetermined communication system. This wireless communication enables voice telecommunication between certain mobile phones, sending and receiving e-mail and data communication such as downloading content from information provider sites.

The voice-processing unit 115 encodes sending audio signals that are input from the microphone 116 with a predetermined system and sends them to the control unit 111. The voice-processing unit 115 decodes receiving voice signals that are received by the wireless communication unit 113 and outputs them through the speaker 117. Furthermore, this voice-processing unit 115 outputs incoming melodies memorized in the internal memory 112, and voice signals such as sound effects used by application programs through the speaker 117. The sound output means for outputting sound is configured with the voice-processing unit 115 and the speaker 117.

The image processing unit 118 processes image data received by the wireless communication unit 113, as well as image data such as icons, menus and incoming notice images memorized in the internal memory 112, and displays them on the display unit 119 formed by a liquid crystal display (LCD) or the like.

The key operation unit 120 comprises data input key (numeric keys, a *key and a #key), a call start key, a call end key, a scroll key and a multi-function key, which are used to send and receive telephone calls as well as scroll or select information displayed on the display unit 119.
This key operation unit 120 is also used as a designation means for designating at least one of a plurality of key selection detection functions as recognition functions of the key selection detection unit 180.

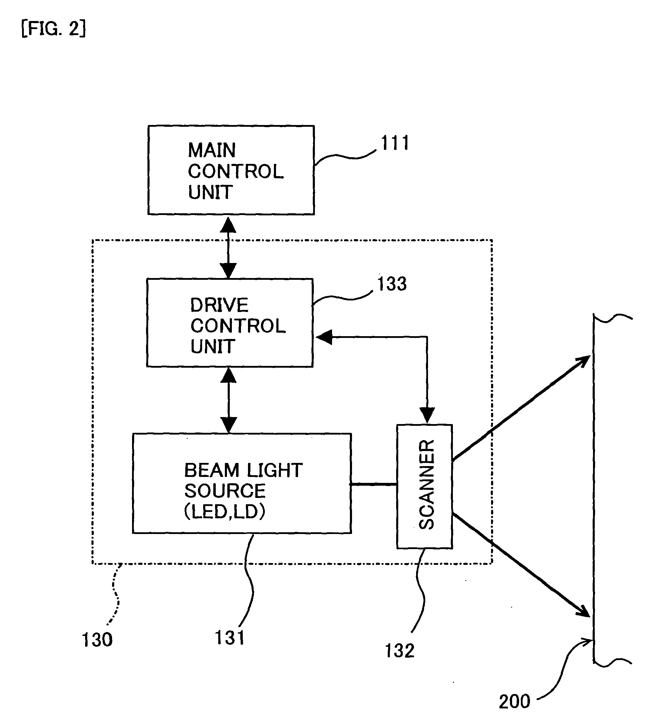

Fig. 2 is a block diagram showing a configuration example of the foregoing image projection unit 130. This image protection unit 130 is configured with a beam light source 131, an optical scanner 132 and a drive control unit 133 to drive them. For the beam light source 131, a LD (semiconductor laser), a LED (light-emitting diode) or the like can be used. The strength of beam light output from the beam light source 131 is controlled by the drive control unit 133 based on control data sent from the main control unit 111. The optical scanner 132 is an optical device for projecting on the projection screen 200, scanning a beam light output from the beam source 131 two-dimensionally. Beam light scanning by the optical scanner 132 is drive-controlled by the drive control unit 133 in the same way as the beam light source 131. For this photo scanner 132, for example, one with small type galvano mirrors capable of high speed scanning can be used. In addition, the drive control unit 133 comprises an image memory to memorize image data, and pre-registered data of images as subjects to be projected and data for images as subjects to be projected sent with control data from the control unit 111 are memorized. The beam light source 131 and the optical scanner 132 are drive-controlled based on the image data memorized in this image memory.
As the beam light source 131, by using a light source capable of outputting a plurality of types of beam lights (e.g. three primary-color beam lights) with different wavelength each other, and if each beam light is scanned at same time and projected, color images can be projected onto the project screen 200.
As the beam light source 131, a light source formed with one-dimensional array elements having luminous points aligned in a row may be used, wherein light intensity of the luminous points can be controlled independently each other. In this case, line-shape light output from the light source may be scanned one-dimensionally by the optical scanner 132.
As the beam light source 131, a light source formed with two-dimensional array elements having luminous points aligned in two-dimensionally may be also used, wherein light intensity of the luminous points can be controlled independently each other. In this case, instead of the optical scanner 132, an optical system for enlarged projection that projects onto the projection screen 200 by enlarging two-dimensional images displayed on the light sources is used.

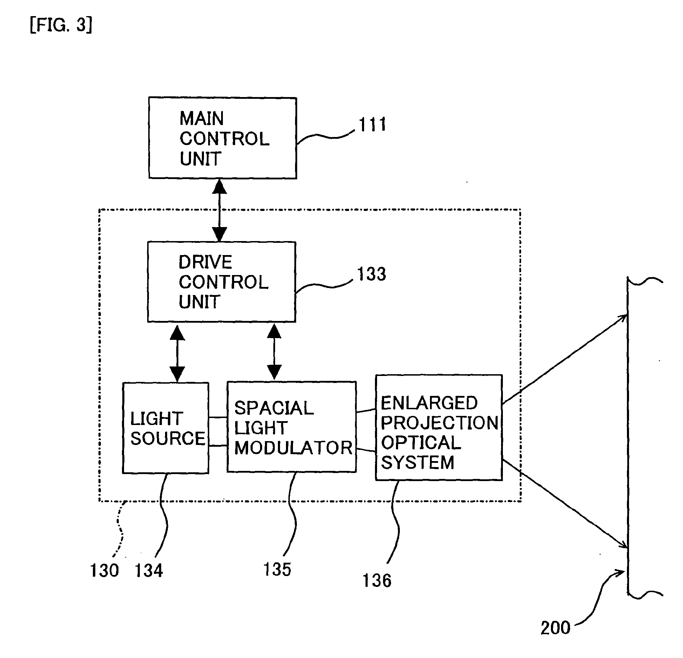

Fig. 3 is a block diagram showing another configuration of the image projection unit 130. This image projection unit 130 is comprised of a light source 134 such as a lamp, a spatial light modulator 135, an optical system for enlarged projection 136 and the drive control unit 133.
As the spatial light modulator 135, for example, a liquid crystal display used by a normal mobile phone and the like may be used. In this case, an image is displayed reversing black and white opposite to the display mode on a transparent type of liquid crystal display. Light from the light source 134 is irradiated on the liquid crystal display surface on which an image is displayed reversing black and white in this manner, and the reflected image is enlarged by the optical system for enlarged projection 136 and projected on the projection screen 200. As this liquid crystal display, a liquid crystal display provided on a normal mobile phone and the like may also be used as well.
As the spatial light modulator, a light modulator in which small mirrors aligned two-dimensionally can be used, wherein the tilt of small mirror can be controlled independently. In this case, based on image data, the tilt of each mirror is controlled, and reflected light towards the projection screen 200 from each mirror is switched on/off. This reflected image from the special light modulator 135 is enlarged by the optical system for enlarged projection 136 and projected onto the projection screen 200.

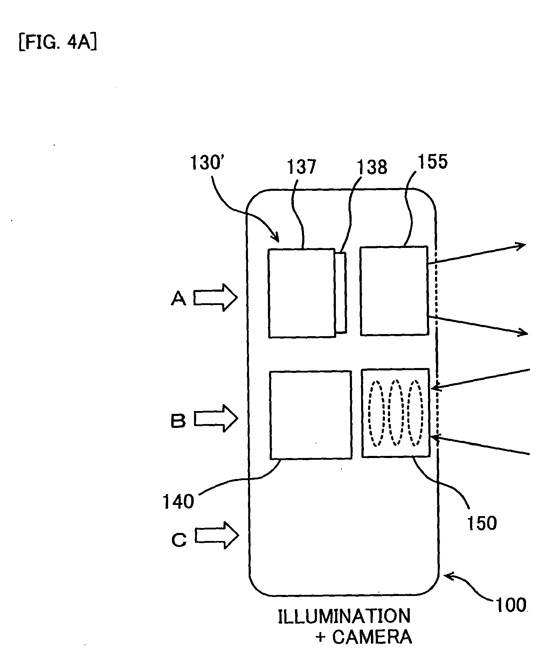

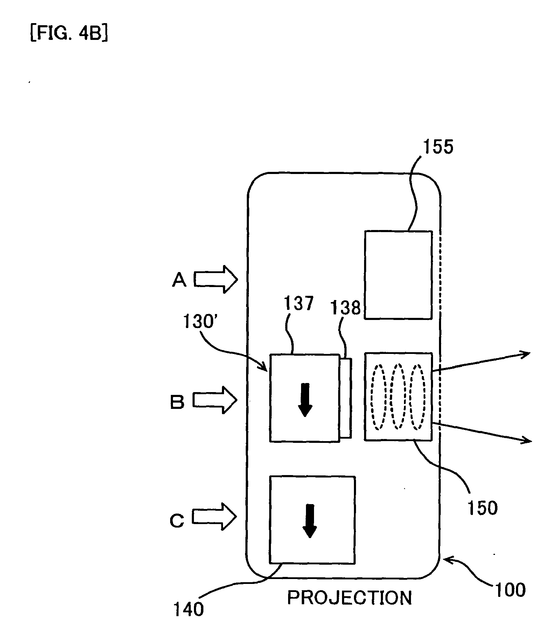

Fig. 4A and Fig. 4B are internal configuration diagrams of the mobile phone with an image projection unit according to the other configuration examples. The image projection unit 130 in this configuration example comprises a light generation unit 130' for generating light-image as a subject to be projected, and an optical system for projection imaging which projects by imaging the light-image generated by the light generation unit 130' on an external projection screen 200. The same after-mentioned LED unit 137 and liquid crystal display unit 138 are both shared as this light generation unit 130', the same after-mentioned optical system for camera imaging 150 is shared as the aforementioned optical system for projection imaging. The light output from LED unit 137 is modulated by the liquid crystal display unit 138 controlled based on the image data, and then, the light-image as a subject to be projected is generated. This light-image as a subject to be projected is projected on the projection screen 200 by the optical system for camera imaging 150 shared as the optical system for projection imaging.
The camera function in this configuration example is embodied by a camera unit 140 that generates image data by transforming the light-image to electronic signals, and an optical system for camera imaging 150 for imaging the light-image as a subject to be shot on camera unit 140. The camera unit 140 comprises a CMOS-type imaging device, a CCD-type imaging device or the like, and the driving of the image shooting device and the saving of the shot image data are controlled by the main control unit 111. The optical system for camera imaging 150 has a drive mechanism that changes the position of a plurality of lenses so as to have an amplifying function, and this drive mechanism is controlled by the main control unit 111. The light-image as a subject to be shot is imaged on the light receiving face of the camera unit 140 by the optical system for camera imaging 150. The light-image is transformed to the electronic signals by the camera unit 140 and the image data is generated. The image data generated in the camera unit 140 is saved in the data memory unit such as the internal memory 112.
Moreover, the illumination lamp function in the configuration example is embodied by a light generation unit 130 provided with a LED unit 137 as a light source and a liquid crystal panel 138 as a spatial light modulation unit, and an optical system for diffused illumination 155 to diffuse light output from the light source for homogeneously illuminating an illuminated surface of external unit. The LED unit 137, for example, comprises the white high intensity light emitting diode, and the main control unit 111 controls the ON/OFF of light emitting and so on. The liquid crystal panel unit 138 is configured so that each transmittance of a plurality of picture elements formed two-dimensionally is independently controlled based on control data from the main control unit 111. A transmissive liquid crystal panel is used in this configuration example; however, a reflective liquid crystal panel may be also used. The light output from the LED unit 137 is homogeneously transmitted by the liquid crystal display unit 138 controlled so that each light transmittance of picture elements on the whole surface becomes maximum, and then light as a subject to diffused illumination is generated. The light as a subject to diffused illumination generated by the liquid crystal display unit 138 is diffused and homogeneously irradiated on an illuminated surface of external unit, by the optical system for diffused illumination 155.

In the configuration example shown in Fig. 4A and Fig. 4B, the camera unit 140 and the light generation unit 130' (LED unit 137 and liquid crystal panel unit 138) are configured so as to move to predetermined locations in conjunction with each other so that the foregoing camera and illumination lamp functions and the foregoing image projection function are switched over to each other and used.
In the case of using the camera function and illumination lamp function as shown in Fig. 4A, the camera unit 140 and light generation unit 130' (LED unit 137 and liquid crystal display 138) are moved to following positions in advance, respectively. In other words, the light generation unit 130' (LED unit 137 and liquid crystal display unit 138) is moved to the diffused illumination position A where light is output towards the optical system for diffused illumination 155. And, the camera unit 140 is moved to the imaging position B where light-image is received from the optical system for camera imaging 150. On the other hand, in the case of using the image projection function as shown in Fig. 4B, the camera unit 140 and light generation unit 130' (LED unit 137 and liquid crystal display unit 138) are moved to following positions along the directions indicated with black arrows in the figure in advance, respectively. In other words, the light generation unit 130' (LED unit 137 and liquid crystal display unit 138) is moved to the imaging position B by being replaced with the camera unit 140. And, the camera unit 140 is moved to the escape position C escaped from the imaging position B. Under the state with the units being moved like this, for example, the mobile phone is placed on a desk or set on a battery charger for mobile phones so that the aperture exposing the optical system for camera imaging 150 is directed towards a desired projection screen 200 at standby mode. Then, by user operation of the key operation unit 120, one of the image projection modes for image projection is set.

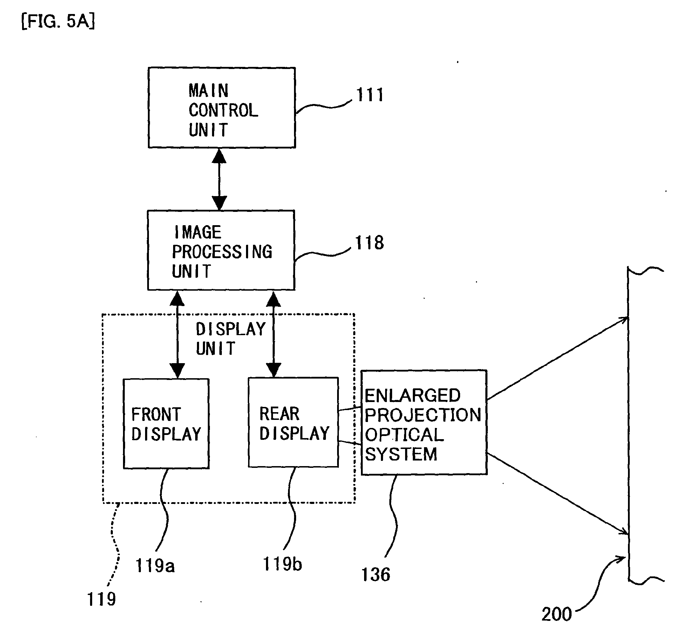

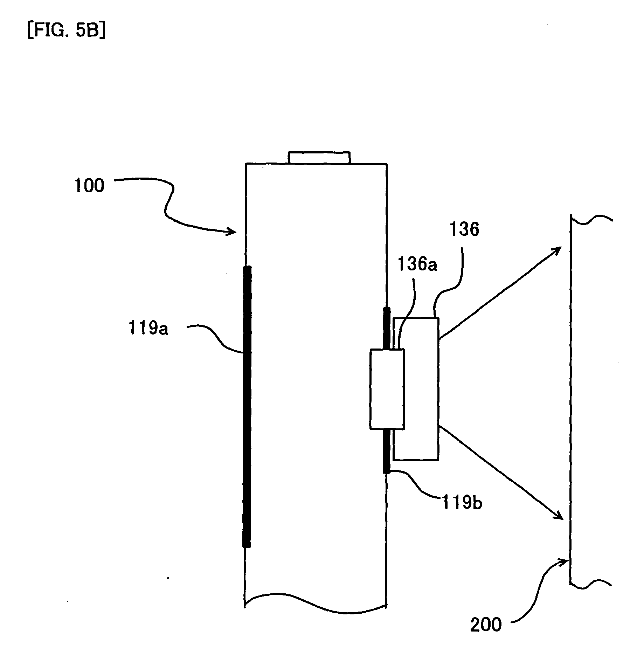

In the case that the image display unit 119 of the mobile phone comprises two liquid crystal displays (front display 119a and rear display 119b) as shown in Fig. 5A, the rear display 119a may be shared as a light source of the image projection unit. In this case, an image displayed on the rear display 119a is projected onto the projection screen 200 by the optical system for enlarged projection 136. This optical system for enlarged projection 136 is configured so as to be detachable for the mobile phone body 100. Normally, it is removed from the mobile phone body 100, and when projecting the image, it can be mounted on the front display 119b of the mobile phone body 100 by using the mount-fixing member 136a provided on both ends. In the case that an image displayed on the rear display 119b as shown if Fig. 5B, it is preferred to control the light intensity of the rear display 119b so as to be higher level than the light intensity in normal image displaying. In this case, it is possible to improve the visibility of the image projected. In the configuration of Fig. 5A and Fig. 5B, there is a case of using the projection optical system 136 that project an image of the rear display 119b by horizontally flipping the image. In this case, when projecting, an image is displayed on the rear display 119b by horizontally flipping an image displayed at normal displaying. Accordingly, the image of text information or the like can be projected in correct horizontal direction as same as normal displaying.

It is noted that the configuration of image projection unit 130 is not limited to the configuration of Fig. 2 - Fig. 5. For example, there may even be a configuration, which projects using the hologram element.

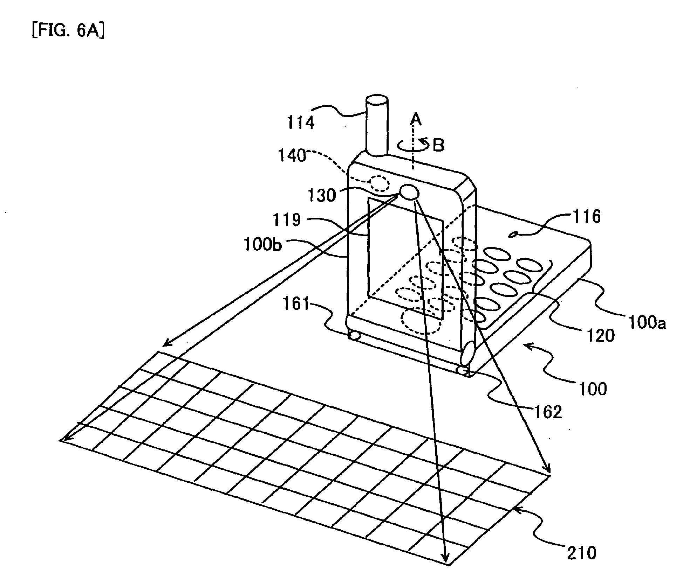

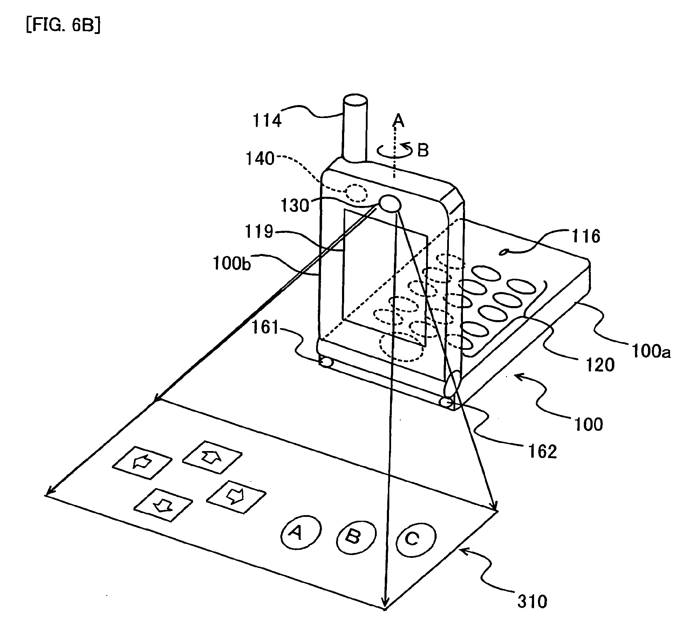

Fig. 6A and Fig. 6B are illustrations showing appearance of projecting a virtual key layout image as an operation-plane image on a predetermined projection area of a projection screen, on which a user can operate at a distance from a clamshell-type mobile phone100 with an image projection unit 130. Fig. 6A is an example where the key layout image is a keyboard image 210 showing an operation plane of a keyboard usually used on a personal computer. Fig. 6B is an example where the key layout image is a game controller image 310 showing an operation plane of a controller used in a game console. This mobile phone 100 is placed on a desk so that the light-output aperture is directed towards a desired projection screen or set on a battery charger for mobile phones. The key selection detection unit 180 detects which key has been selected on the key layout image 210, 310 projected on the projection area by the image projection unit 130.

Next, it is described about the key selection detection unit 180 of the mobile phone in this embodiment.

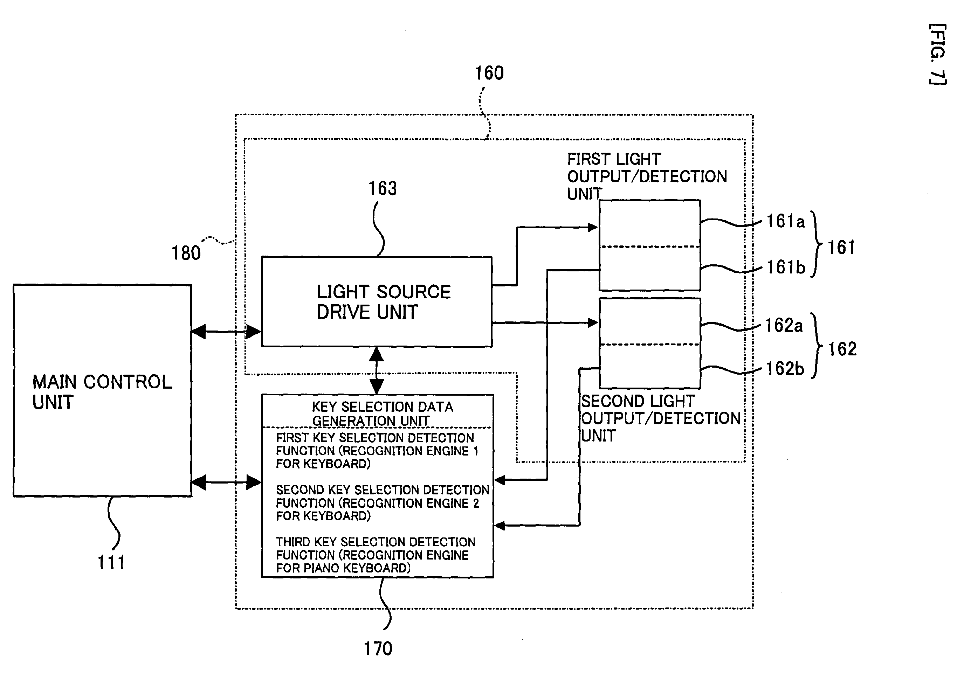

Fig. 7 is a block diagram showing a configuration example of the foregoing key selection detection unit 180. This key selection detection unit 180 comprises a key input movement detection unit 160 as the operation object detection system (key input movement detection means), and a key selection data generation unit 170 as the operation detection data generation system (key selection data generation means). The key input movement detection unit 160 detects an operation (key input movement) by a key input operation object such as a finger or pointer for key selection on the foregoing key layout image 210, 310, and it comprises 2 light output/detection unit 161, 162 provided on both sides close to the hinge portion of the body 100a of mobile phone100 and a light source drive unit 163. The key selection data generation unit 170 generates key selection data corresponding to the key input movement by the key input operation object, based on the detection result of the key input movement detection unit 160.

When executing key input by projecting the key layout image 210, 310 in this embodiment of the mobile phone, as shown in Fig. 6A and Fig. 6B, the mobile phone placed by rotating the cap unit 100b by 180 degrees around the rotating shaft A like arrow B. By placing it as such, users can confirm the images of games during execution or text information displayed on the display unit (liquid crystal display) 119 while performing a key input operation on the key layout image 210, 310.
Each light output/detection unit 161, 162 comprises a laser light source 161a, 162a formed from laser diode or the like, which outputs a laser light, and a light sensor 161 b, 162b formed from a phototransistor, a CCD array device or the like. The laser light source 161a, 162a respectively outputs laser light by sector scanning it along the projection area surface where the key layout image 210, 310 is projected, so that the laser light entirely covers the key layout image 210, 310 on the projection area. Light sensor 161b, 162b respectively outputs the detection signal after receiving the reflected laser light from a user's finger 300 or pointer member, where the laser light from each laser source 161a, 162a, is blocked and reflected by the user's finger 300 or pointer member.

In the case of the configuration of Fig. 7, each of the foregoing two light sensors 161 b, 162b has need to receive light only the laser like from the laser light source paired with the corresponding light sensor, however there is a risk of detection error by simultaneously receiving the reflected laser lights that are output from both laser light source 161a, 162a and reflected. For example, there is a case that the reflected laser light output from the laser source 161a and reflected, which is not detected by the light sensor 161b paired with it, is mistakenly detected by receiving with another light sensor 162b. Consequently, in order to prevent this detection error, it is preferred that the wavelengths of the laser light used in each light output/detection unit 161, 162 are mutually differentiated. Moreover, instead of differentiating the wavelength of the laser light or in addition to differentiating the wavelength of the laser light, the laser light used in each light output/detection unit 161, 162 may be modulated with mutually different codes. In this case, the light output/detection unit 161, 162 can each output the detection signal by receiving only the reflected laser light modulated with the predetermined codes and performing a demodulation process.

The light source drive unit 163 is controlled in accordance with control instructions from the foregoing main control unit 111, and supplies the given drive current or applies the given drive voltage to the laser light source 161a, 162a, and light sensor 161b, 162b. The light source drive unit 163 also changes the angle of laser light output from the laser light source 161 a, 162a in accordance with the control instructions from the main control unit 111.

The key selection data generation unit 170 is controlled in accordance with control instructions from the foregoing main control unit 111, and generates key selection data that indicates which key has been selected, by computing with data of each laser light outputting angle θ1, θ2 when the reflected laser light is detected by the light sensor 161b, 162b. This computing is executed by using the predetermined data table for calculation or calculation algorithm, which corresponds to category of the projected key layout image.
This key selection data generation unit 170 may be provided in the main control unit 111 and shared as the main control unit 111.

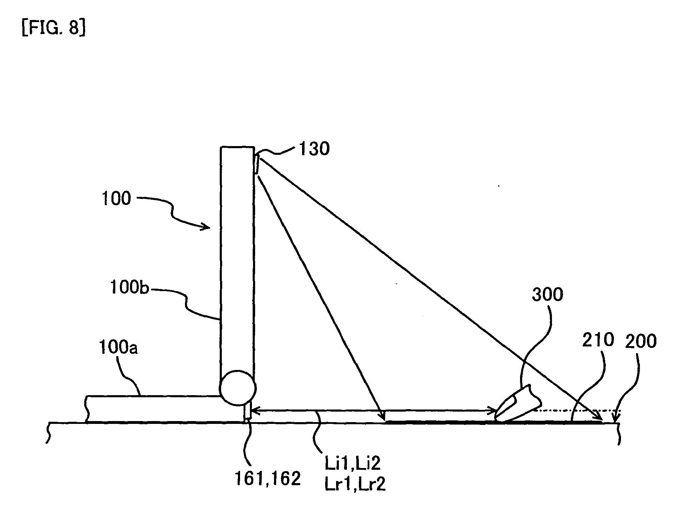

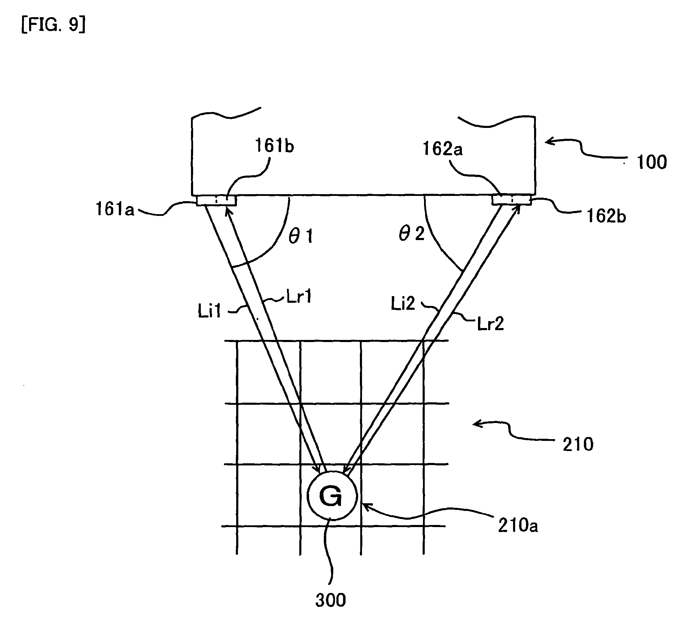

Fig. 8 is a partial lateral view of the mobile phone projecting the key layout image. Fig. 9 is an illustration showing the detection principle of key selection operation of the key selection detection unit 180. These figures correspond to the keyboard image 210 indicated in Fig. 6A, however it is the same for game controller image 310 indicated in Fig. 6B.
In Fig. 8 and Fig. 9, for example, when a key subject to selection (for example, the alphabet "G") is selected by moving a finger 300, pointer or the like to the position of the key subject to selection indicated by symbol 210a, the laser light Li1, Li2, which is output by scanning the angle from laser light source 161 a, 162a of each light output/detection unit 161, 162, is blocked and reflected. This laser light Li1, Li2 are respectively reflected when each output angle becomes the predetermined angle θ1, θ2. Each reflected laser light Lr1, Lr2 are respectively received by the corresponding light sensor 161b, 162b. The data of output angle θ1, θ2 of laser light source 161a, 162a, when detecting each reflected laser light Lr1, Lr2 by the light sensor 161b, 162b, are used for the generation of the key selection data by sending the data to the foregoing key selection data generation unit 170. In other words, when the value of output angle θ1, θ2 of the foregoing laser source 161a, 162a are known, because the position of the selected key (position where image of "G" in Fig. 9 is projected) is uniquely determined, it is possible to generate the key selection data used for identifying the selected "G" key.
In the case of selecting two keys or three or more keys simultaneously, by the same principle, it is possible to generate the plurality of key selection data by detecting the selection of each key.

The main control unit 111 executes the predetermined data process corresponding to the selected key, based on the key selection data output from the key selection generation unit 170 of the foregoing key selection detection unit 180. For example, character data corresponding to the selected key are displayed on the display unit (liquid crystal display) 119 and/or memorized in the internal memory. The execution content of an application program for a game or the like may be changed based on the foregoing key selection data.

For the foregoing data table for computation used for generating the key selection data from the values of the output angles θ1, θ2, the preset data table is used, which is set in advance being related to the key layout data 120, 130 projected by the image projection unit 130. Before the key input using the foregoing key layout image 120, 130, the output angle may be measured for the predetermined standard key (key on the four corners or center key) on the key layout image, and the data table for computation may be corrected by using the value of output angle so that the key selection data are generated by the computation.

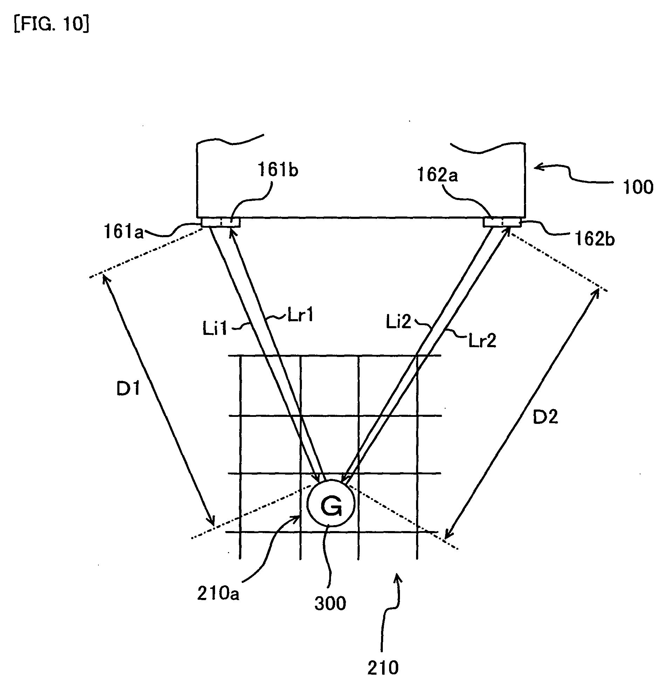

In the example shown in Fig. 9, the values of output angles θ1, θ2 of each light output/detection unit 161, 162 are computed, however, the value of distance D1, D2 between each light output/detection unit 161, 162 and the key subject to selection as shown in Fig. 10. Each value of the distances D1, D2 can be obtained, for example, from the degree of decay of each reflected laser light Lr1, Lr2 received by the light sensor 161b, 162b of each light output/detection unit 161, 162. And, each value of the distance D1, D2 may be obtained from interference between outgoing laser light Li1, Li2 and the corresponding reflected laser light Lr1, Lr2.

In the example shown in Fig. 6 - Fig. 10, the light output/detection units 161, 162 are provided at two positions, however, the units may be provided at three positions, or four or more positions so that the key selection can be detected more accurately.
In the case of blocking laser light from the light output/detection unit 161, 162 when a user's finger is located at home position, the change of received light intensity due to seesaw movement of the finger on the key image subject to selection may be used. For example, when a user move a finger up and down on the key image subject to selection, the intensity of each reflected laser light Lr1, Lr2 received by the light sensor 161b, 162b reaches and stays at level zero within a certain period. When the intensity of each reflected laser light Lr1, Lr2 is changed, it is determined that the key is selected, and the key selection data is generated.

Next, the switching of a plurality of key selection detection functions of the aforementioned key selection detection unit 180 is described.
The key selection detection unit 180 in this embodiment has a plurality of key selection detection functions as mutually different types of recognition functions, which recognize the content of key selection operation from at least one of the position, direction and movement of an operation object such as a user's finger and a operation supporting tool for each of a plurality of key layout images with mutually different types and positions of keys.
The aforementioned key selection data generation unit 164 of key selection data unit 180 shown in Fig. 7 has three types of key selection detection functions. The first key selection detection function and second key selection detection function are respectively embodied by a keyboard image recognition engine corresponding to the keyboard image 210 indicated in Fig. 6A. The first key selection detection function is embodied by the keyboard recognition engine 1 corresponding to the Japanese keyboard image 210 usually used by personal computers. The second key selection detection function is embodied by the keyboard recognition engine 2 corresponding to the keyboard image 210 specialized for English. The third key selection detection function is embodied by piano key recognition engine corresponding to the key layout image of piano keyboard used in an application program of playing piano executed by mobile phones.

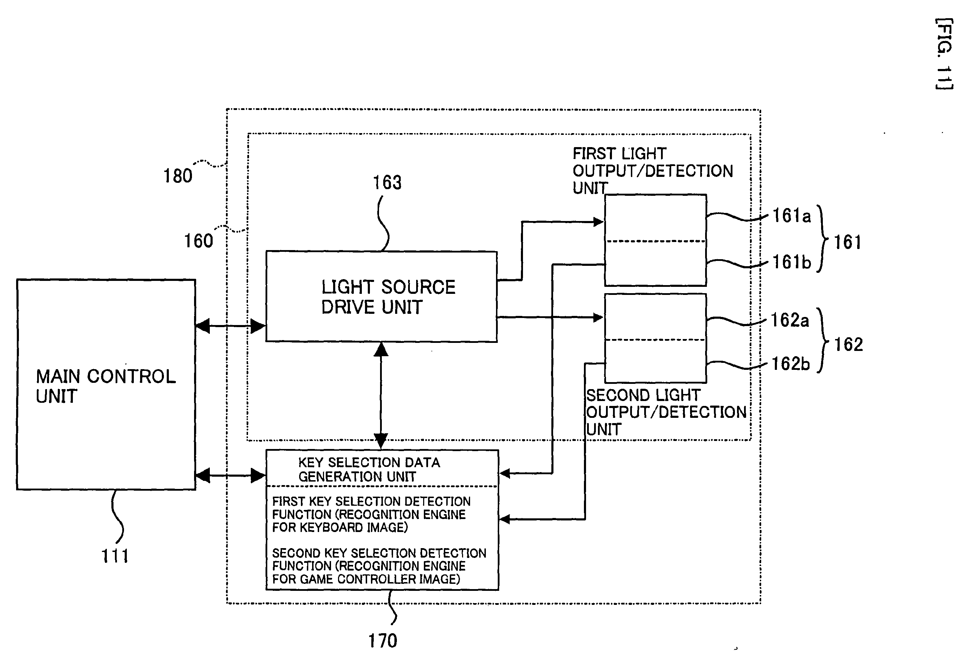

Fig. 11 is a block diagram showing another configuration example of the key selection detection unit 180. The key selection data generation unit 170 of this key selection detection unit 180 has two types of key selection detection functions. The first key selection detection function is embodied by a keyboard image recognition engine corresponding to the keyboard image 210 shown in Fig. 6A. The second keyboard selection detection function is embodied by a game controller image recognition engine corresponding to the game controller image 310 indicated in Fig. 6B.

Each recognition engine is configured with the computing program for key selection recognition created based on the data table for computation and the computing algorithm that are preliminarily designed for each application. Each recognition engine differs in either one of the data table for computation or the computing algorithm.

When switching the key selection detection function, an image for designating a key selection recognition engine is displayed on the display unit (liquid crystal display) 119 by operating the key on the body of mobile phone. Then, for example, from among the three recognition engines (keyboard recognition engine 1, keyboard recognition engine 2, piano key recognition engine) as shown in Fig. 7, one of them as the recognition engine is designated, and an icon for determination (for example "OK") on the screen is clicked. With this operation, the recognition engine can be designated, which embodies the key selection function that a user desires. The key selection detection unit is controlled by the main control unit 111 so as to executing the process of key selection detection by using the recognition engine designated by users, based on the designation data for designating a recognition engine. The image projection unit 130 is controlled by the main control unit 111 so as to select the key layout image corresponding to the key selection detection function (recognition engine) designated by users from a plurality of kinds of key layout images memorized in the memory and project the image, based on the designation data for designating a recognition engine.

Instead of designating the key selection detection function (recognition engine), a key layout image (keyboard image, piano keyboard image, game controller image) may be designated. In this case, it is controlled to project the key layout image designated by users and execute the process of key selection detection using the recognition engine corresponding to the key layout image.

As stated above, according to the embodiment 1, a virtual key layout image can be projected on a plane operable by users without connecting other separate device such as a keyboard, and the operation of key selection on the key layout image can be performed. Accordingly, the portability of mobile phones can be ensured. Moreover, any given key layout image in accordance with content of a predetermined data processing executed by the main control unit 111 can be used by projecting it. Accordingly, it is capable of advanced operability and flexibility in key selecting operation with the key layout.
Furthermore, according the embodiment 1, when a user perform an operation for selecting a key on the key layout image which is one of the plurality of types of key layout keys, the user's key selection can be detected by using the key selection detection function corresponding to the key layout image used by the user. Consequently, the key selection operation for each of a plurality of types of key layout images is correctly detected, and the predetermined data processing such as displaying text information and proceeding a game corresponding to the selected key can be performed without fault.
Furthermore, according to the embodiment 1, from the aforementioned three types of key selection detection functions, users can designate a key selection detection function used for the detection of key selection desired by users, and designate a key layout image subject to projection.
In addition, according to the embodiment 1, the key layout image corresponding to the key selection detection function selected from the aforementioned three types of key selection detection functions can be used for projecting on an external projection screen. Accordingly, it is not necessary to prepare any device with a key layout image formed by printing or the like. Moreover, in the case of projecting the key layout image, it is possible to project by adjustment of position of the key layout image to the appropriate position for key selection detection by the key selection detection means. Accordingly, the key selection can be detected accurately without any detection and operation for positioning the standard position of key layout image.

[Embodiment 2]
Next, the second embodiment of the present invention will be described.
As basic configuration, operation and so on of mobile phones as mobile communication terminals according to the embodiment 2, the same things as in the case of the aforementioned first embodiment can be accepted, and description of common parts will be omitted. Hereinafter, parts different from configuration and operation in the aforementioned first embodiment will be described.

A mobile phone 100 in the embodiment 2 is configured so as to execute an application program developed by object oriented programming which is independent on platforms. Specifically, key selection detection operation by the foregoing key selection detection unit 180, activating of the image projection unit 130 and operation of projecting a key layout image by the image projection unit 130 are executed based on instructions from the application program. This application program includes application programs described with program languages of JAVA (registered trademark), C, C++, and so on. The execution environment of these application programs is built by the middleware of VM (Virtual Machine) of JAVA (registered trademark), BREW (registered trademark) or the like. This application program may be preinstalled in a mobile phone 100, or may be registered by being downloaded from a download server via a mobile phone communication network as a communication network and stored in the mobile phone 100.

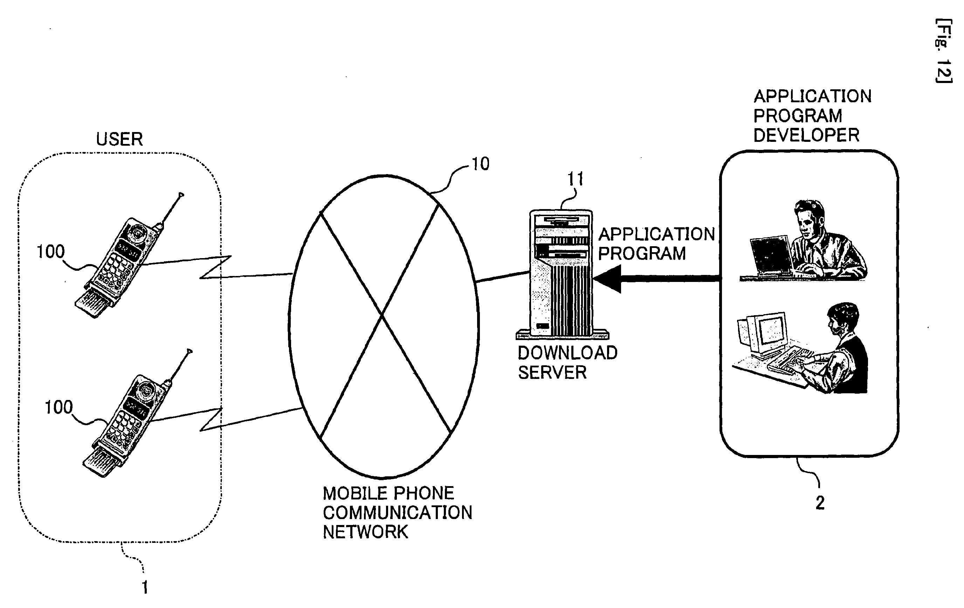

Fig. 12 is an illustration explaining overview configuration of a mobile communication system capable of obtaining application program utilized in the mobile phone 100 of this embodiment.
In this mobile communication system, the mobile phone 100 used by user 1 is configured so as to execute application programs registered by the user 1 in the application program execution management unit 125. In this embodiment, the application programs are developed by object-oriented programming that is independent of platforms. The application programs include application programs described by JAVA (registered trademark), application programs operating on the application execution environment of BREW (registered trademark), and so on. The mobile phone 100 is capable of connecting to the mobile phone communication network 10 as a communication network. The application program download server (hereafter referred to "download server") 11 as a server for providing programs is connected to this mobile phone communication network 10. When receiving a download request from the mobile phone 100, this download server 11 transmits to the mobile phone 100 the application program corresponding to the request.

The application program provided by the download server 11 is provided by development source 2 of application programs. Specifically, for example, they are provided by uploading from personal computers at the application program development source 2 through leased lines and/or public lines to the download server 11. The application programs may be provided by sending recording media such as optical disks and magnetic disks in which the developed application programs are recorded, from the application program development source 2 to communication carrier that manages the download server 11 so that the application program in the recording media are read by the download server 11. Application programs provided in this way are registered in the download server 11 in a state capable of being downloaded from the mobile phone 100 through the mobile phone communication network 10.

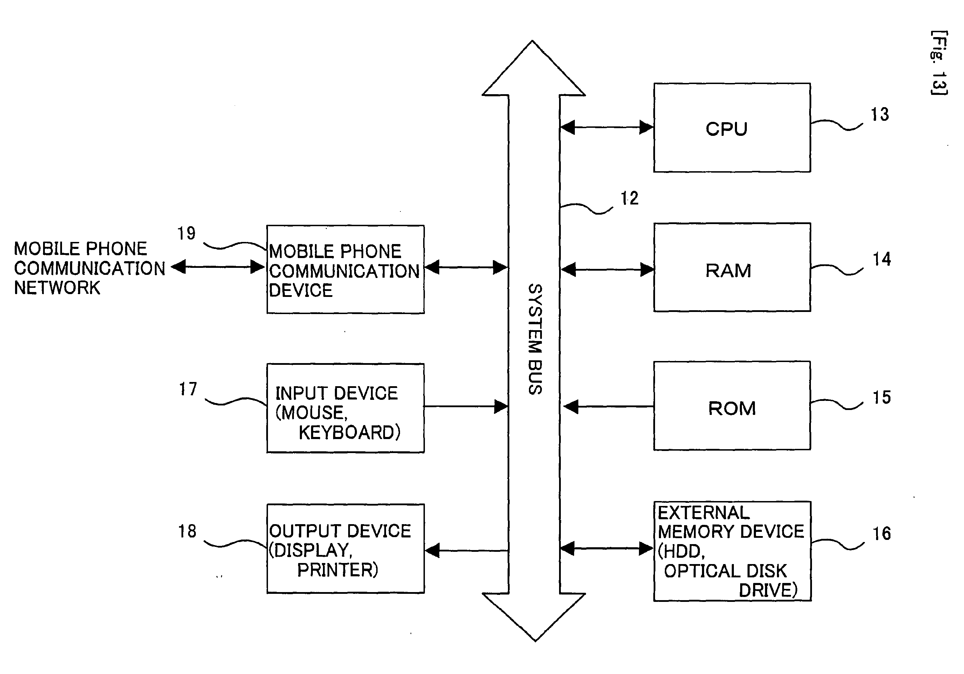

Fig. 13 is an overview configuration diagram showing hardware configuration of the download server 11. The download server 11 comprises a system bus 12, a CPU 13, an internal memory device, an external memory device 16, an input device 17, and an output device 18. The internal memory device is configured with a RAM 14, a ROM 15, and so on. The external memory device 16 is configured with a hard disk drive (HDD), an optical disk drive and so on. The input device 17 is configured with a mouse, a keyboard and so on. The output device 18 is configured with a display, a printer and so on. This download server 11 also has a communication device 19 for mobile phones so as to communicate with the mobile phone 100 of each user 1 via the mobile phone communication network 10.
Components such as the foregoing CPU 13 and RAM 14 perform the mutual exchange of data and program instructions through the system bus 12. Programs for operating the download server 11 in accordance with predetermined steps are memorized in the ROM 15 and/or the external memory device 16, and are executed by read out on work area of the CPU 13 and RAM 14 as necessary. In this download server 11, application programs that are provided to the mobile phone 100 are memorized in the external memory device 16. The download server 11 has the function of sending, through the mobile phone communication network 10 to the mobile phone 100, application programs that are memorized in the external memory device 16, in response to download requests from the mobile phone 100, by cooperation of the CPU 13, RAM 14, communication device 19 for the mobile phone communication network and so on. The download server 11 may be configured as a specialized control apparatus and may be configured using a general-purpose computer system. Furthermore, it may be configured as one computer or may be configured by linking a plurality of computers having each of a plurality of functions via a network.

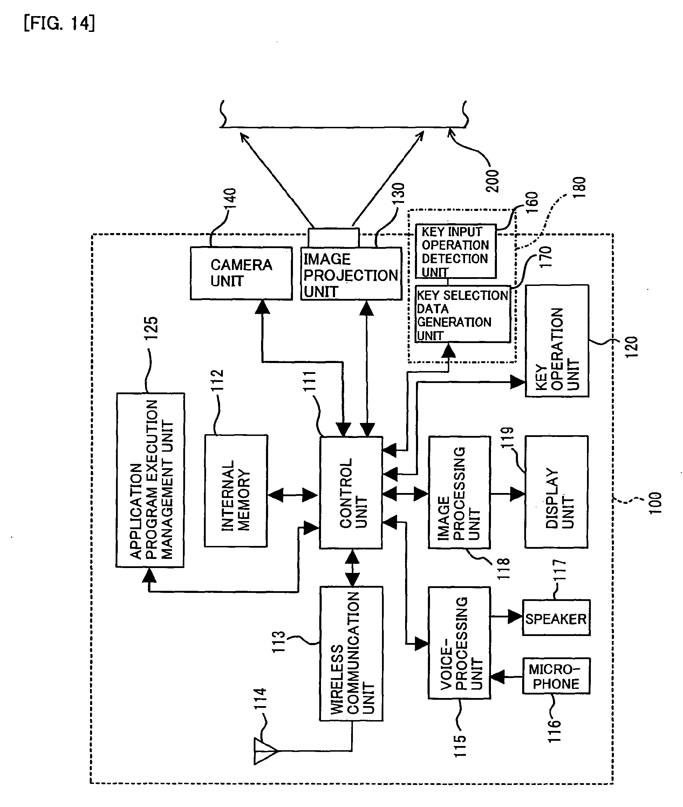

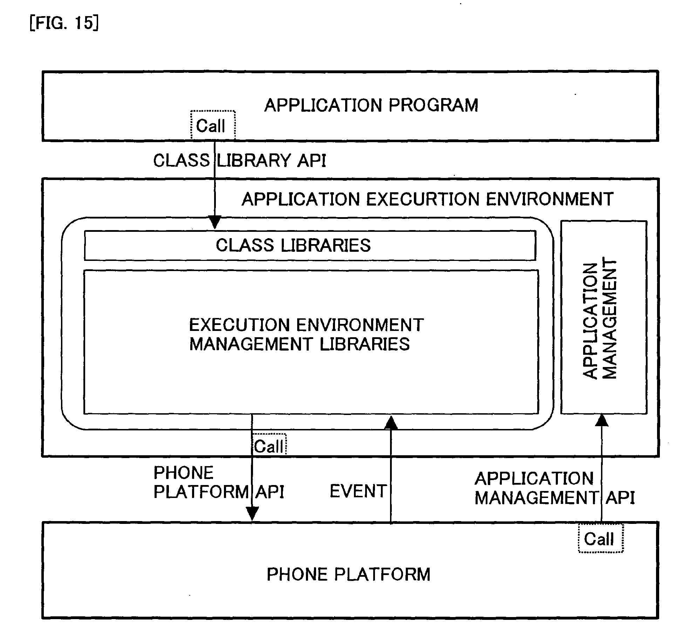

Fig. 14 is a block diagram showing overview configuration of a mobile phone capable of executing application programs, and Fig. 15 is an illustration showing a software configuration in the mobile phone. Besides the aforementioned main control unit 111 and so on, this mobile phone has an application program execution management unit 125 as application program execution management means for managing the execution environment of application programs. This application program execution management unit 125 is configured with a system bus, a CPU, a RAM and so on, and operates in accordance with predetermined middle-wares for executing application programs. The application program execution management unit 125 corresponds to the central "program execution environment" of the software configuration in Fig. 15, provides software such as class libraries, execution environment management libraries and application management that are utilized in application programs developed by object-oriented programming, and manages the execution environment of application programs.
The application programs are capable of calling class libraries such as functions that are within the aforementioned program execution environment via class library APIs (application interface) and then using the class libraries. The history logs of calling class libraries such as these functions are held until the virtual execution environment (VM: virtual machine) of the application programs is terminated. The execution environment management libraries in the program execution environment are capable of calling telephone platform libraries in the telephone platform via telephone platform APIs and then using them.
Control of the image projection and detection of key selection is executed by sending control instructions to the image projection unit 130 and key selection detection unit 180 from the application program execution management unit 125 via the main control unit 111. It may also be configured to execute the control by directly sending control instructions from the application program execution management unit 125 to the image projection unit 130 and key selection detection unit 180.

In the mobile phone with the aforementioned configuration, when projecting the key layout image and detecting key selections during execution of application programs such as stand-by application program and game application program, the predetermined functions for instructions of requesting image-projection activation and/or key selection detection are called from the application program to the application program execution environment. When receiving the calling of function, the application program execution environment sends request instructions for image-projection activation and/or key selection detection to the main control unit 111. When receiving the request instructions for image-projection activation and/or key selection detection, the main control unit 111 sends an activation request instruction and control data for image projection to the image projection unit 130 and sends an activation request instruction to the key selection detection unit 180.
The image projection unit 130 is activated in response to the activation request instruction, and starts projection of the predetermined key layout image that is designated by the control data, based on control data for image projection. The key selection detection unit 180 is activated in response to the activation request instruction, and is set in stand-by state capable of detecting key selections on the virtual key layout image projected by the image projection unit 130.

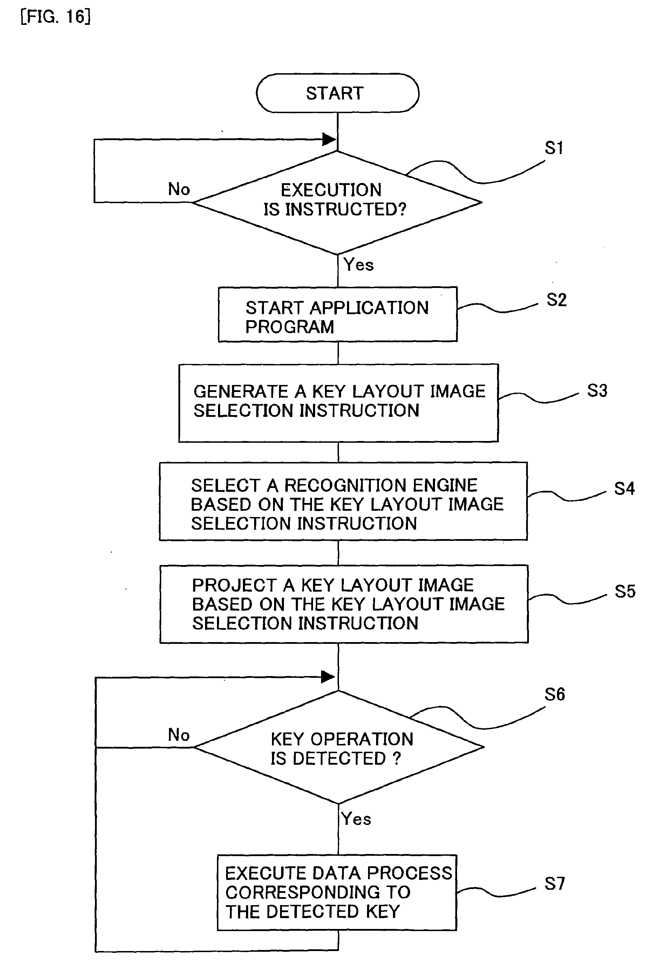

Fig. 16 is a flow chart showing one example of the flow of process for executing an application program in the mobile phone according to the embodiment 2. When executing the application program, first, a user 1 acquires the application program subject to execution by downloading it from the download server 11 and registers it. Specifically, the user 1 accesses the download server 11 by operating the key operation unit 120 of the mobile phone 100. With this operation, a download selection screen for selecting a downloadable application program is displayed on the display unit 119. Then, on the download selection screen, when selecting an application program subject to execution, the main control unit 111 controls the radio communication unit 113 and downloads the application program from the download server 11. The downloaded application program in this way is memorized in the internal memory 112 by the main control unit 111.

When the user 1 executes the downloaded application program, first, the user operates keys of the key operation unit 120 so that an application selection screen for selecting the application program to execute is displayed on the display unit 119. On the application selection screen, the user operates keys of the key operation unit 120 and selects an application program subject to execution. Then, the execution instruction of the application program is input (S1) into the telephone platform shown in Fig. 15, or in other words, the main control unit 111 shown in Fig. 14. With this operation, the main control unit 111 reads out the application program corresponding to the execution instruction and activates it (S2). When the application program starts, the application program operates on the application execution environment shown in Fig. 15, or in other words, the application program execution management unit 125 shown in Fig. 14.

When the application program starts, the application program execution management unit 125 functions as means of generating instructions, and generates key layout image selection instructions in accordance with the contents of application program (S3). These key layout image selection instructions are for performing, in the main control unit 111, the selection of recognition engine and selection of the key layout image that correspond to the key layout image ID described in the property information of the application program. In this embodiment, the image data of keyboard image 210 shown in the Fig. 6A and image data of the game controller image 310 shown in Fig. 6B are memorized in the internal memory 112 of the mobile phone 100 beforehand, in a state where the images are respectively related to the corresponding key layout image ID. Therefore, in this embodiment 2, the development source 2 of the application program selects either the keyboard image 210 or game controller image 310 as the key layout image that is appropriate for the application program and describes the ID of the selected key layout image in the property information of the application program. For example, in the case that the application program relates to text input (i.e., word processor), the key layout image ID corresponding to the keyboard image 210 is described in the property information. Furthermore, for example, in the case that the application program relates to a game application, the key layout image ID corresponding to the game controller image 310 is described in the property information. According to the embodiment 2, by utilizing the key layout image memorized beforehand in the mobile phone 100 while developing the application program, it is no longer necessary for development source 2 of application programs to create a key layout image independently, so the burden of development is reduced.
To simplify the description in the embodiment 2, there are two types of key layout images memorized beforehand in the mobile phone 100. In the case of corresponding to more types of application programs, three or more key layout images may be memorized in the mobile phone 100 beforehand.

The key layout image selection instruction generated by the application program execution management unit 125 is sent to the main control unit 111 of the telephone platform. When receiving the instruction, the main control unit 111 selects (S4) a recognition engine corresponding to the key layout image ID related to the instruction, from among a plurality of key selection detection functions (recognition engines) included in the key selection detection unit 180. Then, the main control unit 111 sends, to the key selection data generation unit 170, the designation data for designating a recognition engine corresponding to the key layout image ID according to the key layout image selection instruction. Accordingly, the key selection data generation unit 170 executes the key selection detection process by using the designated recognition engine based on the designation data.

When receiving the key layout image selection instruction, the main control unit 111 selects and reads-out the image data corresponding to the key layout image ID related to the instruction, from the internal memory 112. Then, by controlling the image projection unit 130, the key layout images 210, 310 based on the read image data are projected (S5) on a projection screen 200. Thereby, the key layout images 210, 310 appropriate for the activated application program are projected on the projection screen 200. When the user perform (S6) key operations for the key layout images 210, 310 to utilize the application program, this operation is detected by the key input operation detection unit 160 of the key selection detection unit 180, and the detection results are sent to the key selection data generation unit 170. The key selection data generation unit 170 executes a process of detecting the key selection using a recognition engine selected in the aforementioned S4 based on the detection results, generates key selection data, and sends this to the main control unit 111. This key selection data is sent from the main control unit 111 to the application program execution management unit 125. The application program execution management unit 125 functions as the data processing means and performs data processing corresponding to the key selected on the basis of the key selection data, in accordance with content of the application program during execution. For example, in the case that the application program under execution is a word processor, a data processing for displaying text corresponding to the selected key on the display unit 119 is performed. In the case that the application program under execution is a game, for example, a data processing for allowing a game character displayed on the display unit 119 to operate an action corresponding to the selected key is performed.

As stated above, according to the embodiment 2, in the case that the application program under execution is a word processor, users can utilize the application program by operating the operation unit (keyboard image 210) that is appropriate for the word processor. Furthermore, in the case that the application program under execution is a game, users can utilize the application program by operating the operation unit (game controller image 310) that is appropriate for the game. In this way, users can utilize the application program by operating the operation unit that is appropriate for each application program and users' usability improves. In addition, according to the embodiment 2, without connecting a physical operation unit such as a keyboard, users can project virtual key layout images 210, 310 on an operable surface and can perform an operation of selecting keys on the key layout image. Consequently, portability of mobile phone 100 can be ensured.

In the embodiment 2, it is described the case that the recognition engine is provided for each key layout image 210, 310 independently and the corresponding recognition engine is selected on the basis of the key layout image selection instruction generated by the application program execution management unit 125. In other words, In the mobile phone 100 of this embodiment, the key selection detection unit 180 has a plurality of types of key selection detection functions (recognition engines), and based on the key layout image selection instruction generated by the application program execution management unit 125, the main control unit 111 functions as detection function selecting means for selecting the recognition engine corresponding to key layout images 210, 310 projected by the image projection unit 130. The key selection detection unit 180 performs a key detection process using a recognition engine selected by the main control unit 111 during execution of the application program. However, if one recognition engine that is common to a plurality of key layout images 210, 310 is used, it is possible to make the selection process (S4) of the recognition engine unnecessary. For example, based on detection results of the key input operation detection unit 160, position coordinate data of operation-positions where users operate within the projection area are generated and transferred to the application program execution management unit 125. Then, the relationship between the position coordinate data and the corresponding key may be identified in each application program.

[Embodiment 3]
Next, the third embodiment of this invention will be described.
As basic configuration, operation and so on of mobile phones as mobile communication terminals according to the embodiment 3, the same things as in the cases of the aforementioned first embodiment and the second embodiment can be accepted, and description of common parts will be omitted. Hereinafter, parts different from configuration and operation in the aforementioned first embodiment and second embodiment will be described.

As same as in the aforementioned embodiment 2, the mobile phone 100 of this embodiment 3 is configured so as to execute an application program developed by object-oriented programming that is independent of any platform. In this mobile phone 100, besides the main control unit 111and so on as shown in Fig. 14, an application program execution management unit 125 is provided as application program execution management means for managing the execution environment of application programs.

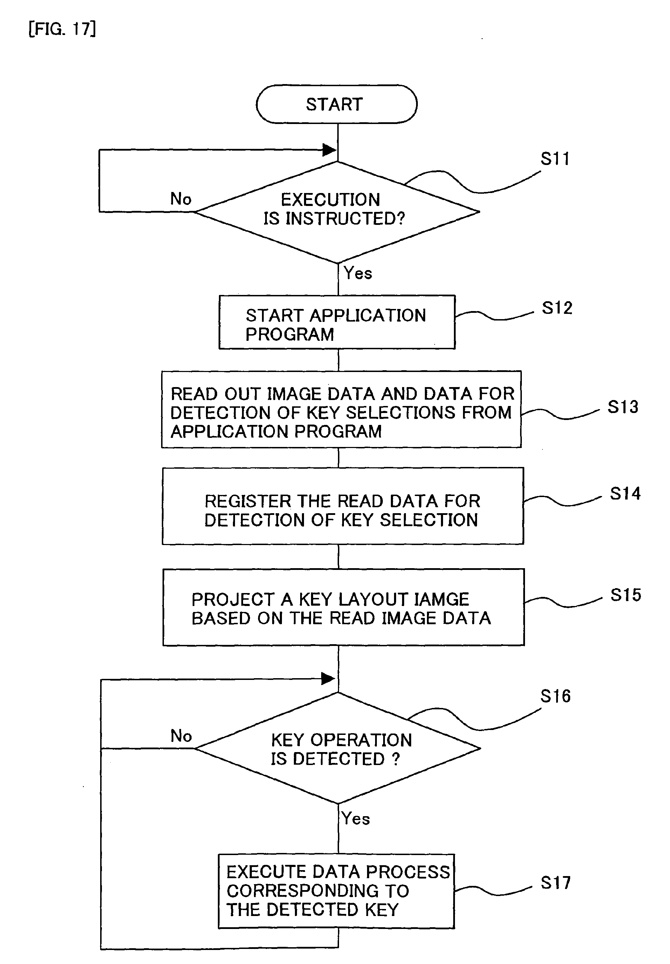

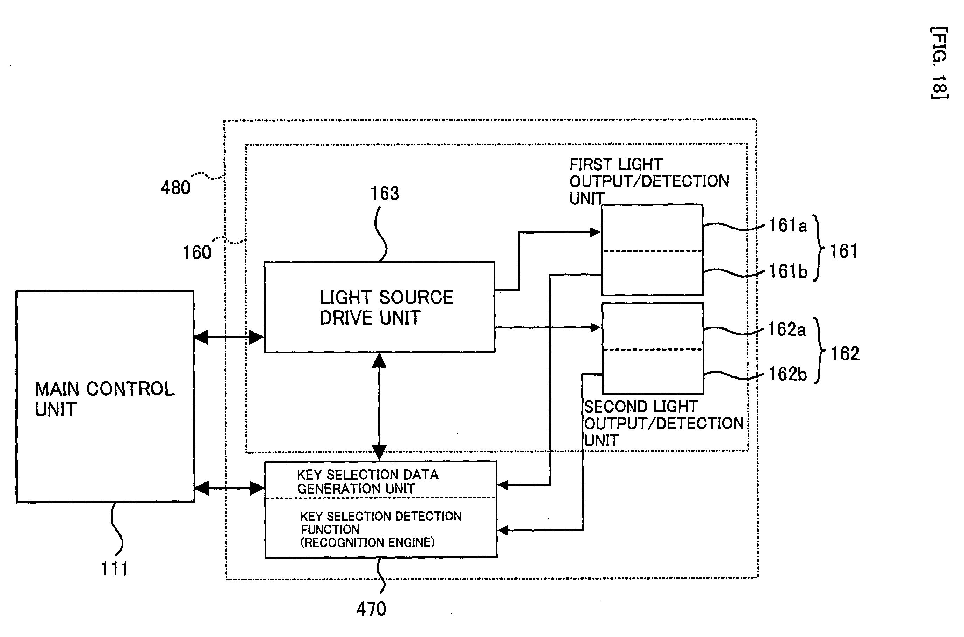

Fig. 17 is a flow chart showing one example of the flow of the execution process of the application program in the embodiment 3. Fig. 18 is a block diagram showing an overview configuration of the key selection detection unit 480 in the embodiment 3.
When executing an application program in the embodiment 3, as in the case of the aforementioned embodiment 1, the user acquires the application program subject to execution by downloading it from the download server 11, and then registers it.
The application program in the embodiment 3 includes image data of a key layout image (keyboard image 210, game controller image 310) projected by an image projection unit 130 when executing the application program. This image data may be data incorporated within the program of application program, or it may be separate data added to the application program. In other words, this image data should at least be acquired when acquiring the application program. As stated above, in the embodiment 3, the image data of key layout images 210, 310 projected when executing the application program is provided together with the application program. Thus, for development source 2 of application programs, the key layout image optimized for the application program can be created independently, and this key layout image is used by users when executing the application program. For example, in the case that the application program relates to text input (i.e., a word processor), users can easily utilize the application program by including image data of the keyboard image 210 shown in the aforementioned Fig. 6A into the application program. Furthermore, for example, in the case that the application program relates to a game application, users can easily utilize the application program by including image data of the game controller image 310 shown in Fig. 6B into the application program.

Even if application programs are different each other, it is possible to share a key layout image if they are the same type of application program such as those related to game applications. However, for example, even if each of a plurality of application programs relates to game applications, the number of buttons used in each game may be different each other. In the case that the number of buttons used in a game is four, the game controller image 310 shown in Fig. 6B cannot be utilized. In contrast, in the case that the number of buttons used in a game is two, some unnecessary buttons, which may cause operation error of users, exist on the game controller image 310 shown in Fig. 6B. In this way, even if they are the same type of application program, the optimal key layout for each application program may be different each other, depending on practical content of the application program. Accordingly, in the view of improving usability for users, it is important to prepare individual key layout image used when executing application programs for each application program.

The application program in this embodiment 3 includes data for detection of key selection that is used for generating key selection data in the key selection detection unit 480 during execution of the application program. In the case that the key selection detection unit 480 uses a different data or performs a different process for each key layout image projected, the foregoing data for detection of key selection is the data used or the data relating the process performed. The data for detection of key selection in this embodiment 3 is data table for computation used by a recognition engine in the key selection data generation unit 470 of the key selection detection unit 480. By using the data for detection of key selection in the recognition engine, it is possible to generate normal key selection data regarding keys operated by users for the key layout image that is based on image data included in the application program. Additionally, data for detection of key selections may be a computation algorithm used in recognition engine or may be both of a data table for computation and a computation algorithm. This data for detection of key selection also may be data incorporated within the program of application program or may be separate data added to the application program. In other words, it should at least be acquired together when the application program is acquired.

When a user 1 executes a downloaded application program, first, the user operates keys on the key operation unit 120, displaying an application selection screen for selecting an application program to execute, on the display unit 119. The user operates keys on the operation unit 120 and selects the application program subject to execution on the application selection screen. Then, an execution instruction of the application program is input (S11) into the telephone platform shown in Fig. 15, or in other words, the main control unit 111 shown in Fig. 14. Thereby, the main control unit 111 reads-out and starts the application program relating to the execution instruction (S12). When the application program is started, the application program operates on the application execution environment shown in Fig. 15, or in other words, the application program execution management unit 125 shown in Fig. 14.

When the application program is started, the application program execution management unit 125 functions as data readout means and reads out (S13) image data and data for detection of key selection from the application program. These image data and data for detection of key selection is sent to the main control unit 111 of the telephone platform together with an instruction for displaying key layout image generated by the application program execution management unit 125. When receiving the instruction, the main control unit 111 sends data for detection of key selections to the key selection detection unit 480 and registers (S 14) a computation data table relating to the data for detection of key selections, in the recognition engine. Specifically, as shown in Fig. 18, the key selection data generation unit 470 of the key selection detection unit 480 has functions for detecting key selections. These key selection detection functions are embodied by a recognition engine for keyboard images that corresponds to the keyboard image 210 through registered data for detection of key selections, in the case that the key layout image corresponding to the application program is a keyboard image 210 shown in Fig. 6A. In the case that a key layout image corresponding to the application program is a game controller image 310 shown in Fig. 6B, the key selection detection function is embodied by a recognition engine for game controller images that corresponds to the keyboard image 310 through registered data for detection of key selections. The recognition engine is configured by a computation program for recognition of key selections created based on a computation algorithm as well as computation data tables with registered data for key selections. The key selection data generation unit 470 executes a process of detecting key selections using a recognition engine based on the registered data for key selection.

When receiving the instruction for displaying key layout image, the main control unit 111 controls the image projection unit 130 so as to project the key layout image 210, 310 onto the projection screen 200 based on the image data received from the application program execution management unit 125 (S15). Thereby, a key layout image based on the image data included in the started application program, or in other words, a key layout image that optimized by the application program is projected on the projection screen 200. Then, when the user performs a key operation for the key layout images 210, 310 to utilize an application program (S6), this key operation is detected by the key input operation detection unit 160 of key selection detection unit 480, and the detection results are sent to the key selection data generation unit 470. Based on the detection results, the key selection data generation unit 470 executes a process of detecting key selections using the recognition engine based on the data for detection of key selections registered in the step S 14, and generates key selection data which is then sent to the main control unit 111. This key selection data is sent from the main control unit 111 to the application program execution management unit 125. The application program execution management unit 125 functions as data processing means and performs a data process corresponding to the key selected in the basis on the key selection data, in accordance with content of the application program during execution, as same as the aforementioned embodiment 2 (S 17).

As stated above, according to this embodiment 3, in the case that the application program subject to execution is a word processor, users can utilize the application program by operating the optimal operation unit (keyboard image 210) for the word processor. Furthermore, in the case that the application program subject to execution is a game, users can utilize the application program by operating the optimal operation unit (game controller image 310) for the game. In this way, usability for users is improved, because they can utilize the application program by operating the optimal operation unit for each application program. In addition, according to this embodiment 3, without connecting a physical operation unit such as a keyboard, users can project virtual key layout images 210, 310 onto a plane operable by users and can perform the operation of selecting keys on the key layout image, thereby portability of the mobile phone 100 can be ensured.

In this embodiment 3, it is described the case that data for detection of key selections is read out from the application program (S13) and registered (S14) when starting the application program, however, it may also be performed at a timing other than the startup. For example, the detection of data for key selections can be read out and registered even when the application program is being downloaded. In this case, when a plurality of application programs is downloaded, a plurality of data for detection of key selections is registered and a plurality of recognition engines exists in the key selection detection unit 480. Therefore, when the application program is started, the recognition engine relating to the data for detection of key selections included in the program itself can be used selectively.
Furthermore, in this embodiment 3, it is described the case that image data is read out from the application program (S13) and key layout images 210, 310 are projected based on the image data (S15) when starting the application program; however, it is possible to adopt other processes as well. For example, when the application program is downloaded, image data may be read out from the application program registered in the internal memory 112; then, when executing the application program, the image data may be read out and the key layout images 210, 310 may be projected based on the image data. In this case, when downloading a plurality of application programs, a plurality of image data is registered in the internal memory 112, so when executing the application program, the image data included in the program itself may be read out selectively.
Furthermore, in the mobile phone 100 of this embodiment 3, data for detection of key selections corresponding to a key layout image based on the image data is included in content of the application program. The application program execution management unit 125 reads out image data of the key layout image and data for detection of key selections, which are included in the content of the selected application program, and the key selection detection unit 480 performs a key detection process by using a function for detection of key selections (recognition engine) that is configured by the read-out data for detection of key selections during execution of the application program. However, if one recognition engine that is common to a plurality of key layout images 210, 310, it is not necessary that a data for detection of key selections is included in content of the application program and a recognition function is built by reading out the data. For example, based on detection results of the key input operation detection unit 160, position coordinate data of operation-positions where users operate within the projection area are generated and transferred to the application program execution management unit 125. Then, the relationship between the position coordinate data and the corresponding key may be identified in each application program.

[Embodiment 4]
Next, the fourth embodiment of this invention will be described.
As basic configuration, operation and so on of mobile phones as mobile communication terminals according to the embodiment 4, the same things as in the cases from the first embodiment to the third embodiment can be accepted, and description of common parts will be omitted. Hereinafter, parts different from configuration and operation in the aforementioned embodiments from the first embodiment to the third embodiment will be described.

The mobile phone 100 in this embodiment 4 performs a control of changing keyboard image 210 as an operation-plane image in accordance with operation positions of users, and this control changes the color of key images when users select the keys, and executes a process of changing the selected key images so as to enable the users to recognize whether the operation of keys intended by the users were performed successfully.

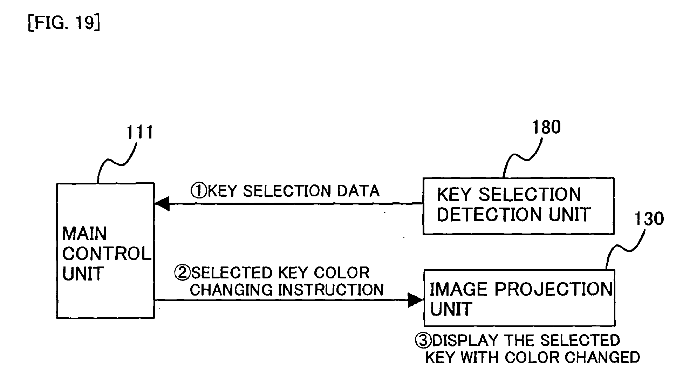

Fig. 19 is a control block diagram regarding the process of changing the selected key images for mobile phones in this embodiment 4. As mentioned above, when users perform key operation using a finger 300, for example, on a virtual keyboard image 210, the finger 300 is detected by a key selection detection unit 180 as operation detection means and the key selection data is sent to a main control unit 111. Then, the main control unit 111 performs a predetermined data processing corresponding to the key selection data and sends a key color changing instruction corresponding the key selection data to an image projection unit 130. When receiving this instruction, the image projection unit 130 changes the color parameter of the image portion of key relating to the selected key color changing instruction in accordance with the instruction, regarding image data of the keyboard image 210 that is currently projected. Then, the keyboard image 210 based on the image data after changing is projected on the projection screen 200.

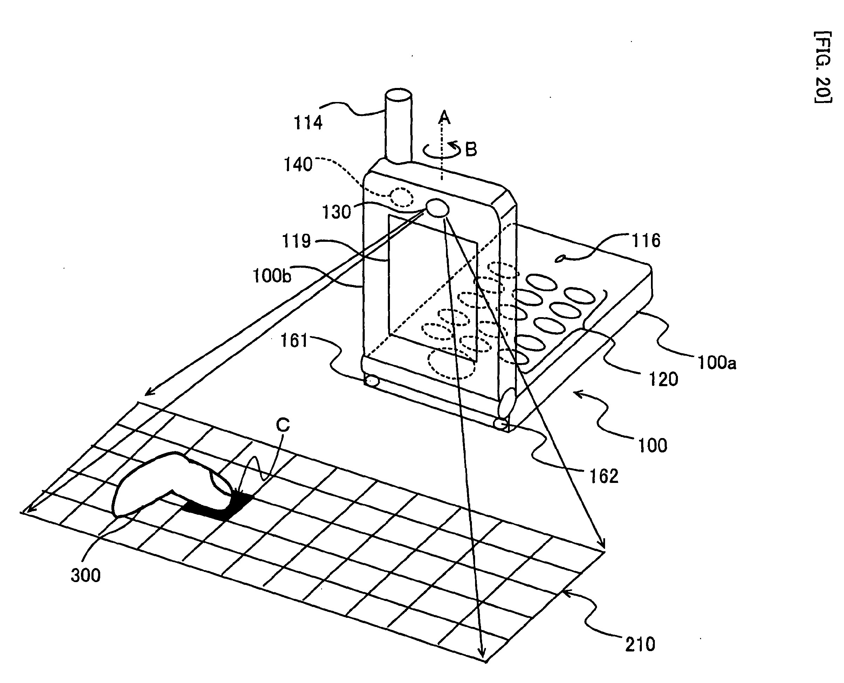

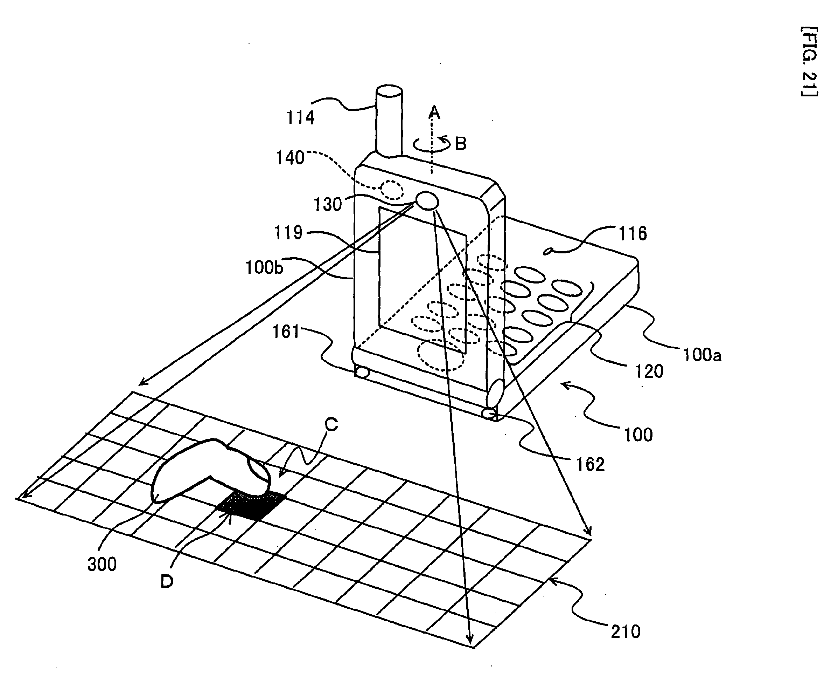

By performing this kind of process, the color of "C" key corresponding to the operation-position operated by a user, as shown in Fig. 20. Accordingly, users can recognize whether their own operations have been properly accepted, by the change in color.
Furthermore, by the change in color, users can recognize whether the keys intended by the users have been operated properly. For example, as shown in Fig. 21, it is assumed that the "C" key is intended to be operated by a user; however, unintentionally somewhere between the "C" key and the "D" key located below is pressed down. In this case, in the past, it was not possible to recognize which key was accepted by the key operation until identifying, on the screen, the text or the like input by the key operation stroke. In contrast, according to this embodiment, because the color of the accepted key is immediately changed, it is possible for the user who operate while watching the keyboard image 210 to quickly recognize that the "D" key is accepted in the case of this illustration. Therefore, the user can immediately notice that the "D" key below the "C" key is accidentally operated even though the user tried to operate the "C" key.

As stated above, according to this embodiment 4, a virtual keyboard image 210 can be projected on a plane operable by users without connecting to other separate device such as a keyboard, and the operation of key selection on the keyboard image can be performed. Accordingly, the portability of mobile phones can be ensured. Moreover, according to this embodiment 4, in the case that an operation for selecting a key is performed on the keyboard image 210, the color of key image is changed where the key accepted by the mobile phone, or in other words, the key corresponding to the users' operation-position. Therefore, even if users do not confirm text and so on displayed as operation results of accepted keys by the image display unit 119, the accepted keys can be confirmed by watching the keyboard image 210 operated by users. Accordingly, users can immediately notice operation error when making a mistake in operation even though the users are not accustomed to keyboard operation such as key operation while watching a keyboard.

[Modified Example of the Embodiment 4]
In the aforementioned embodiment 4, it is described the case that the operation device, which has an operation-plane virtually expressed with a projected image by the image projection unit 130, is a keyboard; however, the present invention can be applied to various types of operation devices. In the modified example hereinafter mentioned, it is described the case that the operation device, which has an operation-plane virtually expressed with a projected image by the image projection unit 130, is an operation device for handwritten input.

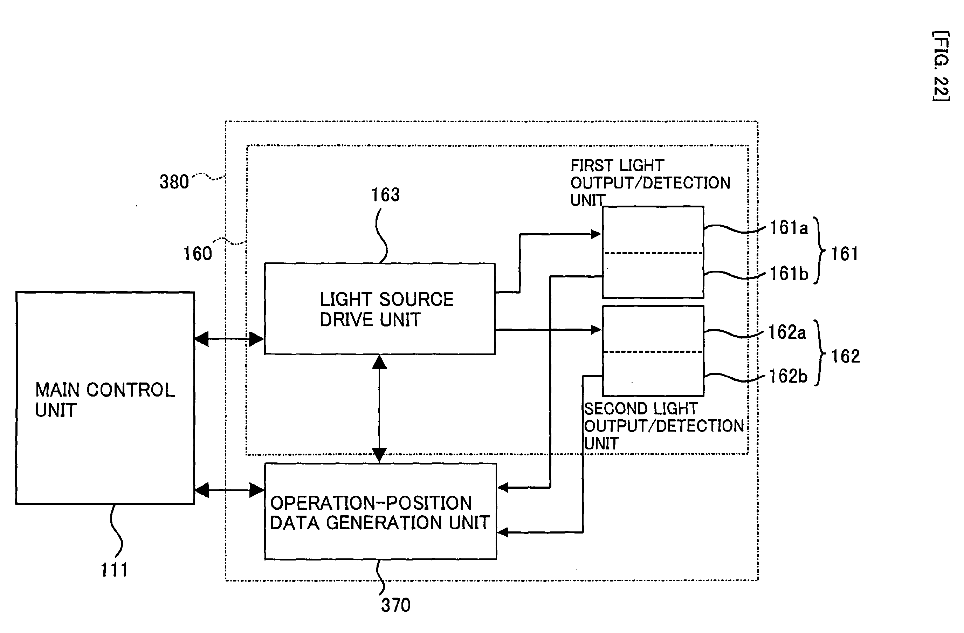

Fig. 22 is a block diagram showing the overview configuration of the operation-position detection unit 380 as operation detection means provided in a mobile phone according to a modified example of the embodiment 4. This operation-position detection unit 380 is the same as the foregoing key selection detection unit 180 except to have an operation-position data generation unit 370 instead of the key selection data generation unit 170 in the aforementioned embodiment 4. The operation-position data generation unit 370 continuously generates operation-position data that shows users' operation-position on the handwritten input operation-plane image 405, based on detection results of each light output/detection units 161, 162, and continuously outputs this data to the main control unit 111. Thereby, the main control unit 111 can continuously keep track of the operation-position operated with a user's finger 300 on the handwritten input operation-plane image 405. In other words, the main control unit 111 can keep track of the user's operation-position from the operation-position data continuously output from the operation-position data generation unit 370. Then, the main control unit 111 performs a data process such as a character recognition process for recognizing a text and/or a picture drawn on the handwritten input operation-plane image 405 by the user's finger 300, as characters and/or images.

When a user draws text characters and so on with a finger 300 on the handwritten input operation-plane image 405, the main control unit 111 executes an input-tracking image changing process for changing the color of the image that is the tracking portion such as the text characters.
Specifically, when receiving operation-position data from the operation-position data generation unit 370, the main control unit 111 sends, to the image projection unit 130, an operation-position color changing instruction for changing the color of the image of the operation-position corresponding to the operation-position data. Similar to the case of the aforementioned embodiment 4, when receiving the instruction, the image projection unit 130 changes the color parameter of the image portion of the operation-position relating to the operation-position color changing instruction in accordance with the instruction, regarding image data of the handwritten input operation-plane image 405 that is currently projected. Then, the handwritten input operation-plane image 405 based on the image data after changing is projected on the projection screen 200.

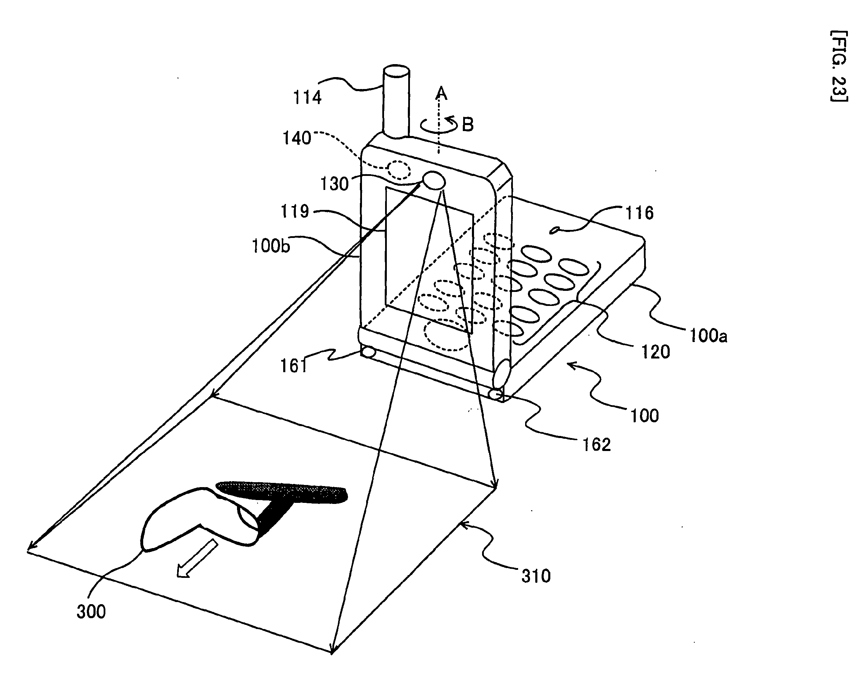

By repeating this kind of process in each case of receiving the time operation-position data from the operation-position data generation unit 370, the color of the position corresponding to the operation-position operated by the user is changed as shown in Fig. 23. Therefore, by the change of the color, the user can recognize the tracking of handwritten input corresponding to the change of operation-position self-operated, and can thereby keep track of the text characters that are being self-drawn. According to this modified example, users can immediately notice that they have not properly drawn text characters intended by them, because they can confirm the text characters drawn themselves while watching the handwritten input operation-plane image 405 that is subject to the users' own operation.

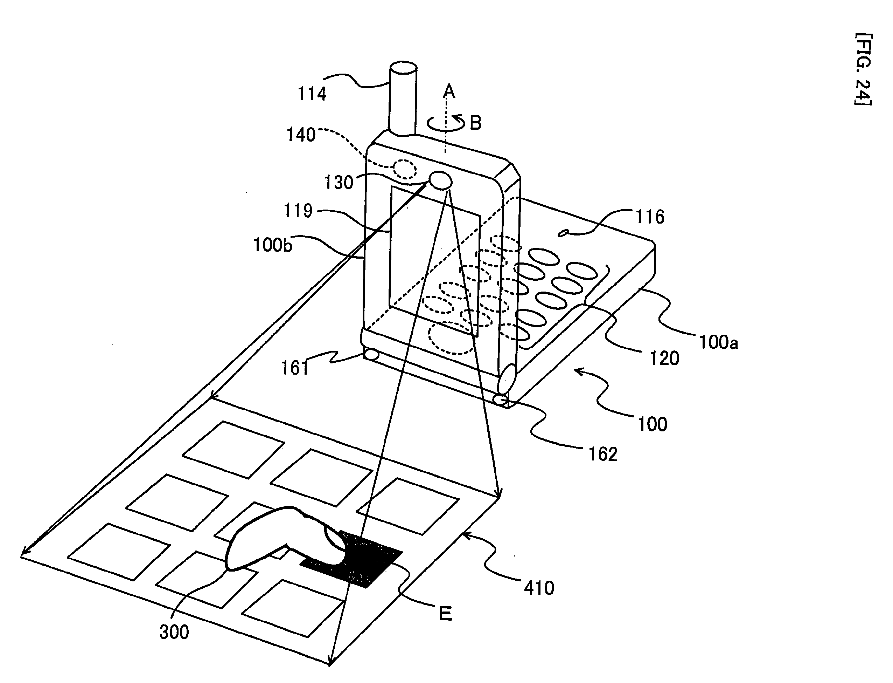

In the aforementioned embodiment 4 and the modified example, it is described the case of changing the color of the image corresponding to the operation-position when the users operated; however, the brightness of the image may be changed, or the image itself may be changed to another image.
Furthermore, in the aforementioned embodiment 4 and the modified example, it is described the case in which the operation device virtually expressed with a projected image from the image projection unit 130 is a keyboard, or when the operation device is an operation device for handwritten input; however, the present invention can also apply to other various types of operation devices. For example, it can apply to operation devices such as piano keyboards. Furthermore, as shown in Fig. 24, a menu screen image may be projected by the image projection unit 130 and the projected image may be utilized as an operation device such as a touch panel for selecting on the menu screen. In this case, when a user selects a certain menu E in the menu selection image (operation-plane image) 410 projected on the projection screen 200, the image color or the like of the selected menu portion is changed as stated above.

The mobile phone 100 in the aforementioned embodiment 4 and the modified example may be configured to be capable of executing application programs developed by object-oriented programming which is not dependent on platforms, as in the aforementioned embodiment 2 and embodiment 3.

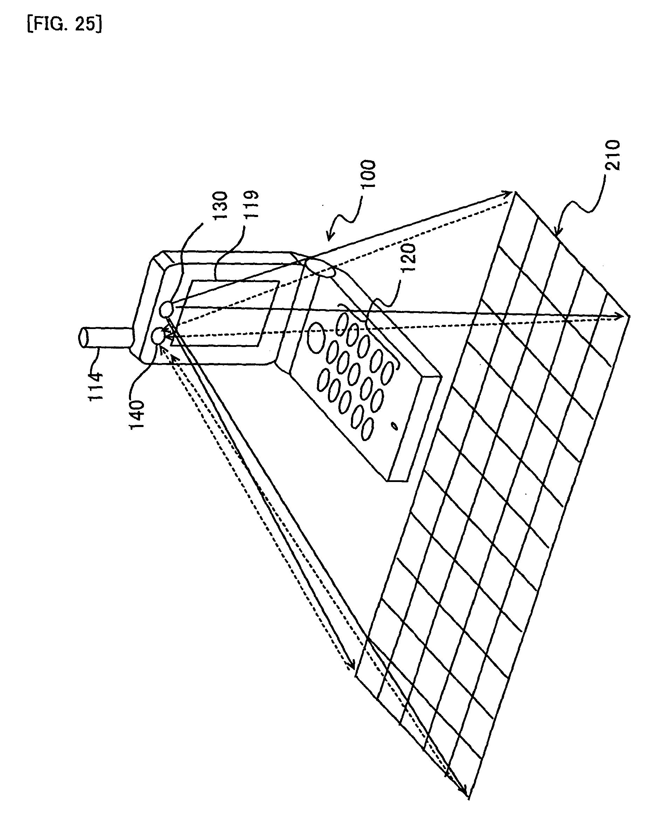

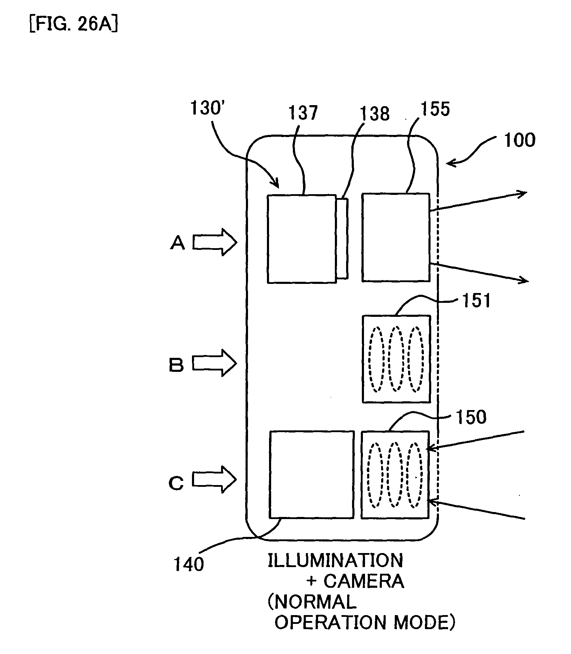

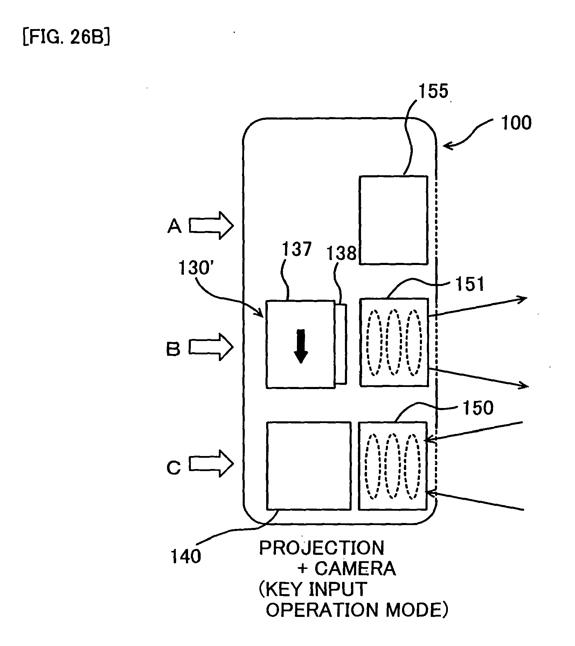

The key selection detection unit 180 in each of the aforementioned embodiments is configured to detect key selections by utilizing the reflection of a laser light to obtain the angle and distance of position of keys subject to selection with/from the main body of the mobile phone; however, the key selection detection unit is not limited to this configuration.
For example, it may be configured to take images of movement of a fingertip or a pointing component which is selecting keys on the aforementioned virtual key layout image, and recognize the pattern of two-dimensional image or three-dimensional image, and detect the key selection operation based on the pattern recognition results. In this case, as shown in Fig. 25, it may be configured to share a camera unit 140 provided in the mobile phone 100 of each aforementioned embodiment so as to take images of the position, direction, movement and so on of the foregoing fingertip or pointer component. In this case, an optical system for projection imaging 151 is provided independently of an optical system for camera imaging 150 as shown in Fig. 26A and Fig. 26B, and a camera unit 140 is located by fixing at a camera position C where the optical system for camera imaging 150 is arranged. This camera unit 140 is used for taking images of movement of the fingertip or pointer component that is operating key input on the virtual key layout image during execution of key input operation mode, as well as used for taking photo-images such as portraits or landscapes during execution of normal operation mode. In the configuration examples of Fig. 26A and Fig. 26B, a light generation unit 130' is movable between position A for diffused illumination and position B for projection, and shared to generate light images as a subject to projection or to generate light as a subject to diffused illumination.

Particularly, in the aforementioned embodiment 4 and the modified example, it may be configured to take images of movement of a finger 300 on the foregoing operation-plane images 210, 405, 410, recognize the pattern of two-dimensional images or three-dimensional images, and detect users' operation-position based on the pattern recognition results. In this case, it may be configured to share a camera unit 140 provided in the mobile phone 100 so as to taking images of the foregoing finger 300. This camera unit 140 is used for taking images of movement of the finger 300 that is operating on the operation-plane images 210, 405, 410 during execution of input operation mode, as well as used for taking photo-images such as portraits and landscapes during execution in normal operation mode.

In the configuration example of the mobile phone 100 in Fig. 25, the light image of key layout image output from the image projection unit 130 passes above the operation unit 120 provided in the main body of mobile phone and is projected onto the projection area which locates apart from the mobile phone. The movement of the fingertips or pointer component on this key layout image is taken by the camera unit 140 provided in the vicinity of the image projection unit 130. The data of the two-dimensional images or three-dimensional images taken by the camera unit 140 is processed by an image processor provided within the mobile phone and is used to detect key selection.

In each of the aforementioned embodiments, the foregoing key selection detection unit 180 may be configured to detect key selections by measuring positions of the fingertip or pointer component with reflection of ultrasonic waves instead of light such as the foregoing laser. For example, the key selection detection unit 180 in the aforementioned embodiment 4 and the operation-position detection unit 380 in the aforementioned modified example may be configured to detect the position of finger 300 by utilizing the reflection of ultrasonic waves instead of light such as the foregoing laser.

In each of the aforementioned embodiments, images displayed by the display unit 119 as well as the virtual key layout image may be projected by the image projection unit 130. For example, images such as text information and games that are related to key selections performed on the key layout image may be also projected. These images such as text information and games are easily visible when the images are projected, for example, between the mobile phone and the virtual key layout image.

Furthermore, in each of the aforementioned embodiments, the application programs, which activate the image projection unit 130 as well as the key selection detection unit 180 and execute the image projection operation as well as the key selection detection operation may be application programs for stand-by to project incoming notice images or may be application programs that are, for example, specialized in controlling the detection of key selections on the virtual key layout image and other projector functions.

As stated above, preferable embodiments of the present invention are described. However, various modifications can be made to the disclosed embodiments without departing from the scope and spirit of the present invention, and within the scope of technical items described in the claims.
For example, the present invention can be applied to not only the above-mentioned mobile phone but also those capable of executing application programs such as PHSs, telephones of automobile phones or the like, and mobile PDAs, and similar effects can be obtained.
Furthermore, the present invention can be applied to operation-plane images of various operation devices other than keyboard images that are images of operation-planes of keyboards or game controller images that are images of operation-planes of game controllers. For example, the present invention can be applied to keyboard images that are images of operation-planes of musical instruments such as pianos, input screen images of handwritten input devices, or menu selection images of various devices.
Furthermore, besides projection images projected with an image projection means, the aforementioned operation-plane images may be images that are formed by printing or the like beforehand on the surface of sheets and so on.

## Claims

1. A mobile communication terminal comprising:
image projection means for projecting an operation-plane image that displays virtually an operation-plane of an operation device operated by users;
operation detection means for detecting operation on the operation-plane image projected by the image projection means; and
data processing means for performing a predetermined data process based on the detection result of operation detected by the operation detection means.

2. A mobile communication terminal according to claim 1, wherein
the image projection means is configured to be capable of projecting for each of a plurality of kinds of mutually different operation-plane images; and
the operation detection means has a plurality of kinds of mutually different recognition functions to recognize operation content by at least one of position, direction and movement of an operation object on the plurality of kinds of operation-plane images.

3. A mobile communication terminal according to claim 2, the mobile communication terminal comprising designation means for designating at least one of the plurality of kinds of recognition functions; wherein
the image projection means projects an operation-plane image corresponding to the recognition function designated by the designation means; and
the operation detection means detects operation on the operation-plane image by using the recognition function designated by the designation means.

4. A mobile communication terminal according to claim 2, the mobile communication terminal comprising application execution management means for managing application program execution environment; wherein
the image projection means projects an operation-plane image corresponding to the recognition function designated by the application execution management means; and
the operation detection means detects operation on the operation-plane image by using the recognition function designated by designation information received from the application execution management means.

5. A mobile communication terminal according to claim 2, the mobile communication terminal comprising designation means for designating at least one of the plurality of kinds of operation-plane images; wherein
the image projection means projects an operation-plane image designated by the designation means, and
the operation detection means detects operation on the operation-plane image by using the recognition function corresponding to the operation-plane image designated by the designation means.

6. A mobile communication terminal according to claim 2, the mobile communication terminal comprising application execution management means for managing application program execution environment; wherein
the image projection means projects an operation-plane image designated by designation information received from the application execution management means; and
the operation detection means detects operation on the operation-plane image by using the recognition function corresponding to the operation-plane image designated by designation information received from the application execution management means.

7. A mobile communication terminal according to claim 1, the mobile communication terminal comprising:
memory means for memorizing a plurality of image data corresponding to each of a plurality of kinds of operation-plane images;
application program execution management means for executing an application program selected from a plurality of kinds of application programs; and
instruction generation means for generating an operation-plane image selection instruction in accordance with content of the selected application program; wherein
the image projection means selects an image data from the plurality of image data memorized in the memory based on the operation-plane image selection instruction generated by the instruction generation means, and projects the operation-plane image of the selected image data; and
the application program execution management means performs a data process corresponding to operation detected by the operation detection means in accordance with the content of the application program during execution of the selected application program.

8. A mobile communication terminal according to claim 1, the mobile communication terminal comprising:
application program execution management means for executing an application program selected from a plurality of application programs and performing a data process corresponding to operation detected by the operation detection means in accordance with the content of the application program; and
data readout means for reading out image data of an operation-plane image included in the content of the application program; wherein
the image projection means projects an operation-plane image based on the image data read out by the data readout means when executing the selected application program.

9. A mobile communication terminal according to one of claims 1 to 8, wherein
the operation detection means detects operation on the operation-plane image, and
the mobile communication terminal further comprises control means for changing at least one portion of the operation-plane image in accordance with content of operation detected by the operation detection means.

10. A mobile communication terminal according to claim 9, wherein the control means changes an image portion that is subject to operation detected by the operation detection means.

11. A mobile communication terminal according to one of claims 1 to 10, wherein
the image projection means comprises a light source, a spatial light modulation unit for modulating light output from the light source, and an optical system for projection imaging that projects by imaging a light image output from the spatial light modulation unit on an external projection screen.

12. A mobile communication terminal according to claim 11, the mobile communication terminal comprising an optical system for diffused illumination for homogeneously illuminating by diffusing light output from the light source to an external illumination plane, wherein
the light source and the spatial light modulation unit are both shared to generate a light image subject to projection and generate a light subject to diffused illumination.

13. A mobile communication terminal according to claim 12, the mobile communication terminal comprising:
a camera unit that generates image data by transforming the light-image to electric signals; and
an optical system for camera imaging for imaging the light image subject to shooting on the camera unit; wherein
the operation detection means is configured by using operation object detection means for detecting at least one of position, direction, and movement of an operation object operating on the operation-plane image and operation detection data generation means for generating operation detection data corresponding to position, direction or movement of the operation object based on the detection results of the operation object detection means; and
the camera unit and the optical system for camera imaging are both shared as the operation object detection means.

14. A mobile communication terminal according to one of claims 1 to 13, wherein
the operation-plane image projected by the image projection means is a key layout image that virtually displays a keyboard arranged with a plurality of keys; and
the operation detection means detects which key is selected on the key layout image.

## Amended claims

### Amended claims under Art. 19.1 PCT

1. (Deleted)

2. (Deleted)

3. (Deleted)

4. (Amended) A mobile communication terminal comprising:
image projection means for projecting an operation-plane image that displays virtually an operation-plane of an operation device operated by users;
operation detection means for detecting operation on the operation-plane image projected by the image projection means;
data processing means for performing a predetermined data process based on the detection result of operation detected by the operation detection means; and
application execution management means for managing execution environment of an application program selected from a plurality of application programs that is downloaded via a mobile communication network; wherein
the image projection means projects an operation-plane image corresponding to recognition function designated by designation information received from the application execution management means, among a plurality of kinds of mutually different operation-plane images; and
the operation detection means has a plurality of kinds of mutually different recognition functions to recognize operation content by at least one of position, direction and movement of an operation object on the plurality of kinds of operation-plane images, and detects operation on the operation-plane image by using the recognition function designated by designation information received from the application execution management means.

5. (Deleted)

6. (Amended) A mobile communication terminal comprising:
image projection means for projecting an operation-plane image that displays virtually an operation-plane of an operation device operated by users;
operation detection means for detecting operation on the operation-plane image projected by the image projection means;
data processing means for performing a predetermined data process based on the detection result of operation detected by the operation detection means; and
application execution management means for managing execution environment of an application program selected from a plurality of application programs that is downloaded via a mobile communication network; wherein
the image projection means projects an operation-plane image corresponding to recognition function designated by designation information received from the application execution management means, among a plurality of kinds of mutually different operation-plane images; and
the operation detection means has a plurality of kinds of mutually different recognition functions to recognize operation content by at least one of position, direction and movement of an operation object on the plurality of kinds of operation-plane images, and detects operation on the operation-plane image by using the recognition function corresponding to the operation-plane image designated by designation information received from the application execution management means.

7. (Amended) A mobile communication terminal comprising:
image projection means for projecting an operation-plane image that displays virtually an operation-plane of an operation device operated by users;
operation detection means for detecting operation on the operation-plane image projected by the image projection means;
data processing means for performing a predetermined data process based on the detection result of operation detected by the operation detection means;
memory means for memorizing a plurality of image data corresponding to each of a plurality of kinds of operation-plane images;
application execution management means for executing an application program selected from a plurality of application programs that is downloaded via a mobile communication network; and
instruction generation means for generating an operation-plane image selection instruction in accordance with content of the selected application program; wherein
the image projection means selects an image data from the plurality of image data memorized in the memory based on the operation-plane image selection instruction generated by the instruction generation means, and projects the operation-plane image of the selected image data; and
the application program execution management means performs a data process corresponding to operation detected by the operation detection means in accordance with the content of the application program during execution of the selected application program.

8. (Amended) A mobile communication terminal comprising:
image projection means for projecting an operation-plane image that displays virtually an operation-plane of an operation device operated by users;
operation detection means for detecting operation on the operation-plane image projected by the image projection means;
application execution management means for executing an application program selected from a plurality of application programs that is downloaded via a mobile communication network, and performs a data process corresponding to operation detected by the operation detection means in accordance with the content of the application program; and
data readout means for reading out image data of an operation-plane image included in the content of the application program; wherein
the image projection means projects an operation-plane image based on the image data read out by the data readout means when executing the selected application program.

9. (Deleted)

10. (Deleted)

11. (Deleted)

12. (Amended) A mobile communication terminal according to claim 4, 6, 7 or 8, wherein
the mobile communication terminal is configured by using comprising a light source, a spatial light modulation unit for modulating light output from the light source, and an optical system for projection imaging that projects by imaging a light image output from the spatial light modulation unit on an external projection screen,
the mobile communication terminal comprises an optical system for diffused illumination for homogeneously illuminating by diffusing light output from the light source to an external illumination plane, and
the light source and the spatial light modulation unit are both shared to generate a light image subject to projection and generate a light subject to diffused illumination.

13. A mobile communication terminal according to claim 12, the mobile communication terminal comprising:
a camera unit that generates image data by transforming the light-image to electric signals; and
an optical system for camera imaging for imaging the light image subject to shooting on the camera unit; wherein
the operation detection means is configured by using operation object detection means for detecting at least one of position, direction, and movement of an operation object operating on the operation-plane image and operation detection data generation means for generating operation detection data corresponding to position, direction or movement of the operation object based on the detection results of the operation object detection means; and
the camera unit and the optical system for camera imaging are both shared as the operation object detection means.

14. (Deleted)
